# EUROPEAN PATENT APPLICATION

(11) **EP 4 749 480 A1**
(43) Date of publication of application: **27.05.2026**
(21) Application number: 24938675.6
(22) Date of filing: 23.12.2024
(51) Int. Cl.: G06F 16/951

(54) **SEARCH RESULT RECOMMENDATION METHOD AND DEVICE**

(30) Priority: 17.05.2024 CN 202410614669
(71) Applicant: HUAWEI TECHNOLOGIES CO., LTD., Shenzhen 518129 (CN)
(72) Inventor: LI, Xiaoran, Shenzhen, Guangdong 518129 (CN); LIU, Xiaobo, Shenzhen, Guangdong 518129 (CN); WANG, Fangshan, Shenzhen, Guangdong 518129 (CN)
(74) Representative: Thun, Clemens
(86) International application number: PCT/CN2024/141340
(87) International publication number: WO 2025/236671

(57) **Abstract**

A search result recommendation method and a device are provided, to improve search performance of an electronic device and improve user experience of using a search function of the electronic device. In this method, the electronic device detects and responds to a search instruction of a user, and may obtain a search word; the electronic device may obtain at least one type of device usage information; and based on the obtained search word and the obtained device usage information, the electronic device may provide a search result that matches the device usage information of the electronic device, where the provided search result may be obtained through screening and/or sorting. In this way, the search result provided by the electronic device may fit a usage habit of the user, or may match a usage status of the electronic device, thereby improving user experience.

## Description

### CROSS-REFERENCE TO RELATED APPLICATIONS

This application claims priority to Chinese Patent application No. 202410614669.3, filed with the China National Intellectual Property Administration on May 17, 2024 and entitled "SEARCH RESULT RECOMMENDATION METHOD AND DEVICE", which is incorporated herein by reference in its entirety.

### TECHNICAL FIELD

This application relates to the field of electronic device technologies, and in particular, to a search result recommendation method and a device.

### BACKGROUND

As functions of an electronic device are gradually improved and enriched, in many scenarios, a user needs to use a search engine to retrieve required information. For example, on a desktop of a mobile phone, a pull-down operation may be generally performed to trigger a global search. For another example, a search may be implemented by a voice assistant. For another example, some search APPs may also have a search function with a specific capability.

Due to a limitation of factors such as complexity of a search source, how to improve user experience of a search function of the electronic device is very important.

### SUMMARY

This application provides a search result recommendation method and a device, to improve search performance of an electronic device and improve user experience.

According to a first aspect, a search result recommendation method is provided, and the method is performed by a first electronic device. In this method, a first instruction is detected, where the first instruction includes a search word; device usage information is obtained, where the device usage information includes at least one of the following information: historical statistical information of an application usage status of the first electronic device, real-time running information of the first electronic device, folding form information of the first electronic device, or continuation status information of the first electronic device; and a screened search result or a plurality of sorted search results are provided in response to the first instruction based on the search word and the device usage information.

In this method, by perceiving device usage information at an operating system level, the first electronic device may provide a search result optimized based on the device usage information, so that the provided search result may match information, for example, a usage habit of a user on the first electronic device or a device usage status of the first electronic device by the user, thereby improving user experience of using a search function of the electronic device.

In a possible design, the historical statistical information of the application usage status of the first electronic device includes at least one of the following information: usage duration information of an application APP, quantity of opening times information of the APP, and last opening time information of the APP.

In this design, the historical statistical information of the application usage status of the user on the first electronic device is obtained, so that the provided search result matches a usage habit of the user for the application. In this way, a search result from an APP that is used by the user for the longest time, a search result from an APP that is used by the user most frequently, or a search result from an APP that is recently opened by the user may be preferentially recommended, thereby improving user experience.

In a possible design, the real-time running information of the first electronic device includes at least one of the following information: background residing information of the APP, network status information, remaining battery level information, running memory information, and storage space information.

In this design, the real-time running information of the first electronic device is obtained, so that the provided search result may adapt to a current running status. In this way, a search result, for example, a search result from an APP residing in a background, may be preferentially recommended, thereby reducing loading time caused by jumping, or a search result, for example, a search result adapting to a network status, a remaining battery level, running memory, or storage space, may be preferentially recommended, thereby improving experience of viewing the search result.

In a possible design, the folding form information of the first electronic device includes: a folded form and an unfolded form.

In this design, the folding form information of the first electronic device is obtained, so that when the first electronic device is in the folded form, a search result matching the folded form may be preferentially recommended, or when the first electronic device is in the unfolded form, a search result matching the unfolded form may be preferentially recommended, thereby improving user experience of using the search function of an electronic device having a folding function.

In a possible design, the continuation status information of the first electronic device includes: a continued state and a non-continued state.

In this design, the continuation status information of the first electronic device is obtained, so that when the first electronic device is continued to a second electronic device, a search result matching the second electronic device may be preferentially recommended, thereby improving user experience of using the search function when the electronic device is in the continued state.

In a possible design, the screened search result is a first search result from a first APP; and the plurality of sorted search results includes: the first search result from the first APP and a second search result from a second APP, where when the plurality of sorted search results are provided on a display interface, the first search result is displayed above the second search result, and/or a display area of the first search result is greater than a display area of the second search result. In a specified historical time period, the first APP and the second APP meet but are not limited to at least one of the following:
(1) usage duration of the first APP is greater than usage duration of the second APP;
(2) a quantity of opening times of the first APP is greater than a quantity of opening times of the second APP; and
(3) last opening time of the first APP is later than last opening time of the second APP.

In this design, a search result that is preferentially recommended is displayed in a frontmost position or displayed in a large display area, to remind the user to preferentially view the search result that is preferentially recommended to the user, thereby ensuring that the search result viewed by the user better fits the usage habit and ensuring experience of viewing the search result by the user.

In a possible design, the screened search result is a first search result from a third APP; and the plurality of sorted search results includes: a third search result from the third APP and a fourth search result from a fourth APP, where when the plurality of sorted search results are provided on a display interface, the third search result is displayed above the fourth search result, and/or a display area of the third search result is greater than a display area of the fourth search result. The third APP and the fourth APP meet but are not limited to at least one of the following:
(1) the third APP resides in a background, and the fourth APP does not reside in the background; or both the third APP and the fourth APP reside in a background;
(2) when the network status information indicates a first network state, a requirement of the third APP on a network status is higher than a requirement of the fourth APP on a network status; or when the network status information indicates a second network state, a requirement of the third APP on a network status is lower than a requirement of the fourth APP on a network status, where the first network state is better than a network status threshold, and the second network state is worse than the network status threshold;
(3) when the remaining battery level information indicates a first remaining battery level, a requirement of the third APP on a remaining battery level is higher than a requirement of the fourth APP on a remaining battery level; or when the remaining battery level information indicates a second remaining battery level, a requirement of the third APP on a remaining battery level is lower than a requirement of the fourth APP on a remaining battery level, where the first remaining battery level is higher than a remaining battery level threshold, and the second remaining battery level is lower than the remaining battery level threshold;
(4) when the running memory information indicates first remaining running memory, a requirement of the third APP on remaining running memory is higher than a requirement of the fourth APP on remaining running memory; or when the running memory information indicates second remaining running memory, a requirement of the third APP on remaining running memory is lower than a requirement of the fourth APP on remaining running memory, where the first remaining running memory is greater than a remaining running memory threshold, and the second remaining running memory is less than the remaining running memory threshold; and
(5) when the storage space information indicates first remaining storage space, a requirement of the third APP on remaining storage space is higher than a requirement of the fourth APP on remaining storage space; or when the storage space information indicates second remaining storage space, a requirement of the third APP on remaining storage space is lower than a requirement of the fourth APP on remaining storage space, where the first remaining storage space is greater than a remaining storage space threshold, and the second remaining storage space is less than the remaining storage space threshold.

In this design, a search result that is preferentially recommended is displayed in a frontmost position or displayed in a large display area, to remind the user to preferentially view the search result that is preferentially recommended to the user, thereby ensuring that the search result viewed by the user better fits a current running status of the electronic device and ensuring experience of viewing the search result by the user.

In a possible design, the providing the screened search result or the plurality of sorted search results based on the search word and the device usage information includes the following two scenarios:
(1) M search results from M APPs are provided when the folding form information of the first electronic device is the folded form; and
(2) N search results from N APPs are provided when the folding form information of the first electronic device is the unfolded form, where the N search results belong to the M search results, N is less than M, and N is a positive integer. The N APPs meet at least one of the following: a version is a high-definition HD version, and the N APPs have an in-application split-screen function.

In this design, a search result that is preferentially recommended is displayed in a frontmost position or displayed in a large display area, to remind the user to preferentially view the search result that is preferentially recommended to the user, thereby ensuring that the search result viewed by the user better fits a folding form of the electronic device and ensuring experience of viewing the search result by the user.

In a possible design, the providing the screened search result or the plurality of sorted search results based on the search word and the device usage information includes the following two scenarios:
(1) P search results from P APPs are provided when the continuation status information of the first electronic device is the non-continued state; and
(2) Q search results from Q APPs are provided when the continuation status information of the first electronic device is the continued state, where the Q search results belong to the P search results, Q is less than P, and Q is a positive integer. The Q APPs meet but are not limited to at least one of the following:
2-1) the Q APPs are installed on a second electronic device, where the second electronic device is a continuation device of the first electronic device; and
2-2) a version of the Q APPs of the second electronic device is a second version, and a version of an APP other than the Q APPs in the P APPs is a first version, where the second version is a version adapted based on a device type of the second electronic device, and the first version is a common version without distinguishing device types.

In this design, a search result that is preferentially recommended is displayed in a frontmost position or displayed in a large display area, to remind the user to preferentially view the search result that is preferentially recommended to the user, thereby ensuring that the search result viewed by the user better fits a continuation status of the electronic device and ensuring experience of viewing the search result by the user.

In a possible design, the providing the screened search result or the plurality of sorted search results based on the search word and the device usage information includes: sending a search request message to a server in response to the first instruction, where the search request message includes the search word; receiving a first search result set from the server; and adjusting the first search result set based on the device usage information, to obtain a second search result set, where the second search result set indicates the screened search result or the plurality of sorted search results.

In this design, the electronic device may adjust a search result from a cloud based on the device usage information obtained by the electronic device, thereby improving a fitting degree between the search result provided by the electronic device and a usage habit of the user or improving a matching degree between the search result provided by the electronic device and a device status of the electronic device.

In a possible design, the first search result set and the second search result set meet but are not limited to at least one of the following:
(1) a display sequence of L search results included in the second search result set is different from a display sequence of the L search results included in the first search result set; and
(2) a quantity of search results included in the second search result set is less than a quantity of search results included in the first search result set.

In this design, the electronic device may optimize the search result from the cloud in a screening manner or a re-sorting manner, thereby improving the fitting degree between the search result provided by the electronic device and the usage habit of the user or improving the matching degree between the search result provided by the electronic device and the device status of the electronic device.

In a possible design, the APP includes but is not limited to at least one of the following:
(1) an APP installed on the first electronic device;
(2) a quick application that is not installed on the first electronic device; and
(3) an applet that is not installed on the first electronic device.

In this design, device usage information in a plurality of scenarios may be obtained, to adjust the search result, so that search results from a plurality of sources may be correspondingly provided and richness of the provided search results may be improved.

According to a second aspect, a device is provided. The device includes a plurality of functional modules, and the plurality of functional modules interact with each other to implement the method performed by the first electronic device in the foregoing first aspect and various implementations of the first aspect. The plurality of functional modules may be implemented based on software, hardware, or a combination of software and hardware, and the plurality of functional modules may be randomly combined or divided based on a specific implementation.

According to a third aspect, a device is provided, including at least one processor and at least one memory. The at least one memory stores computer program instructions, and when the device runs, the at least one processor performs the method performed by the first electronic device in the first aspect and various implementations of the first aspect.

According to a fourth aspect, a program product is further provided. When the program product runs on a device, the device is caused to perform the method performed by the first electronic device in any one of the foregoing aspects and various implementations of the foregoing aspects.

According to a fifth aspect, a readable storage medium is further provided, where the readable storage medium stores a program. When the program is executed by a device, the device is caused to perform the method performed by the first electronic device in any one of the foregoing aspects and various implementations of the foregoing aspects.

According to a sixth aspect, a chip is further provided. The chip is configured to read a program stored in a memory, to perform the method performed by the first electronic device in any one of the foregoing aspects and various implementations of the foregoing aspects.

According to a seventh aspect, a chip system is further provided. The chip system includes a processor, configured to support a device in implementing the method performed by the first electronic device in any one of the foregoing aspects and various implementations of the foregoing aspects. In a possible design, the chip system further includes a memory, and the memory is configured to store a program and data that are necessary. The chip system may include a chip, or may include a chip and another discrete component.

It should be noted that, for beneficial effects of designs of the electronic device provided in the second aspect to the seventh aspect of embodiments of this application, refer to beneficial effects of any possible design of the first aspect. Details are not described herein again.

### BRIEF DESCRIPTION OF DRAWINGS

FIG. 1A is a diagram of a search scenario;
FIG. 1B is a diagram of another search scenario;
FIG. 1C-1 and FIG. 1C-2 are a diagram of still another search scenario;
FIG. 2 is a diagram of a possible hardware structure of an electronic device;
FIG. 3 is a block diagram of a software architecture of an electronic device according to an embodiment of this application;
FIG. 4 is a diagram of a system architecture to which a search result recommendation method according to an embodiment of this application is applicable;
FIG. 5A and FIG. 5B are a diagram of a scenario to which a search result recommendation method according to an embodiment of this application is applicable;
FIG. 6 is a diagram of another scenario to which a search result recommendation method according to an embodiment of this application is applicable;
FIG. 7A and FIG. 7B are a diagram of still another scenario to which a search result recommendation method according to an embodiment of this application is applicable;
FIG. 8A to FIG. 8D are a first display interface of a search result recommendation method according to an embodiment of this application;
FIG. 9A to FIG. 9G are a second display interface of a search result recommendation method according to an embodiment of this application;
FIG. 10A to FIG. 10D are a third display interface of a search result recommendation method according to an embodiment of this application;
FIG. 11A to FIG. 11E are a fourth display interface of a search result recommendation method according to an embodiment of this application;
FIG. 12 is a diagram of another system architecture to which a search result recommendation method according to an embodiment of this application is applicable;
FIG. 13A to FIG. 13F are a fifth display interface of a search result recommendation method according to an embodiment of this application;
FIG. 14 is a first flowchart of a search result recommendation method according to an embodiment of this application; and
FIG. 15 is a second flowchart of a search result recommendation method according to an embodiment of this application.

### DESCRIPTION OF EMBODIMENTS

The following describes embodiments of this application in detail with reference to the accompanying drawings and embodiments.

With rapid development of society, electronic devices such as mobile phones are increasingly popularized. An electronic device not only has a communication function, but also has a powerful processing capability, a storage capability, a photographing function, and the like. The electronic device executes a corresponding application program through an operating system (for example, a HarmonyOS^{®} operating system), and a user may use the electronic device to make a call, send an SMS message, browse a web page, and the like. To help the user to search for information required by the user from massive information, the electronic device may provide a plurality of search scenarios.

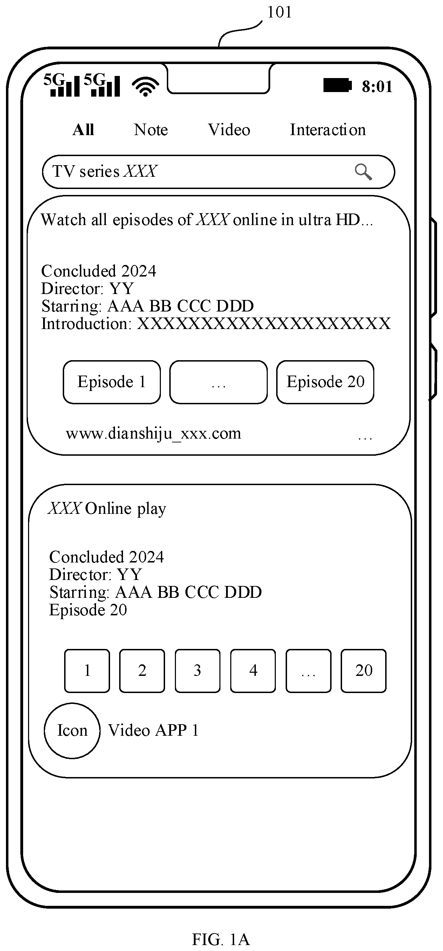

For example, FIG. 1A is a diagram of a search scenario. An electronic device may provide a search result to a user through a search function in an application (application, APP). As shown in FIG. 1A, the electronic device detects and responds to an operation of entering a search word "TV series *XXX"* in a search box by the user, to provide search results shown in an interface 101 to the user.

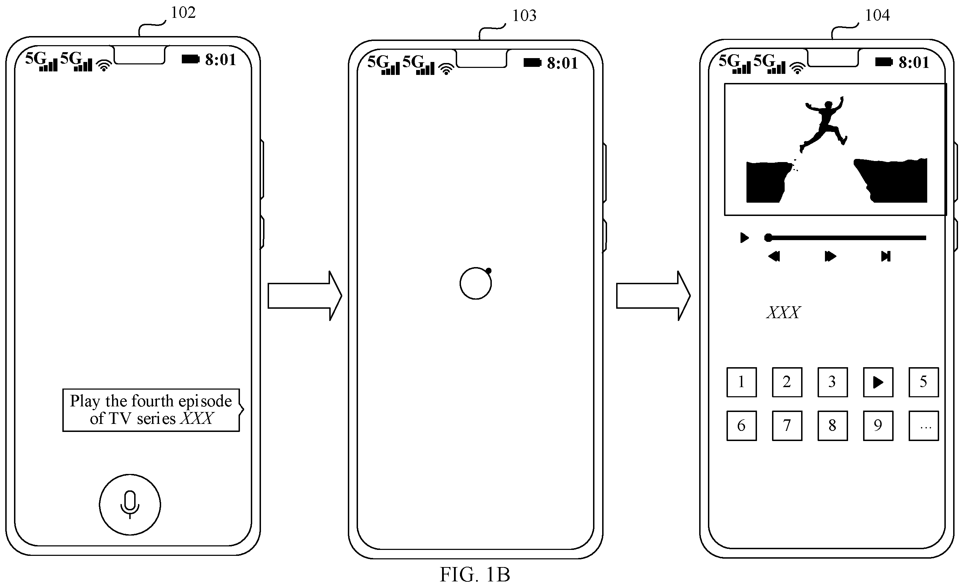

For another example, FIG. 1B is a diagram of another search scenario. The electronic device may alternatively provide a search result to the user through a voice assistant. As shown in FIG. 1B, the electronic device detects a voice instruction indicating "play the fourth episode of TV series *XXX",* and displays an interface 102, where the interface 102 may be used to display the voice instruction recognized by the electronic device to the user. The electronic device displays an interface 103 in response to successful recognition of the voice instruction, where the interface 103 indicates that a video resource is being loaded. On the interface 103, the electronic device displays an interface 104 in response to completion of loading the video resource, where the interface 104 is used to play a video resource of the fourth episode of the TV series *XXX.*

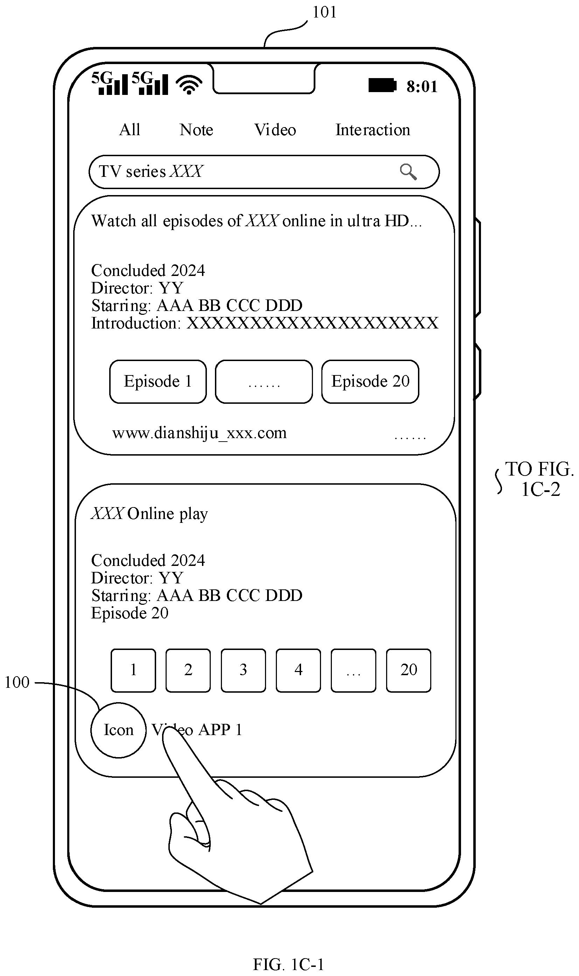

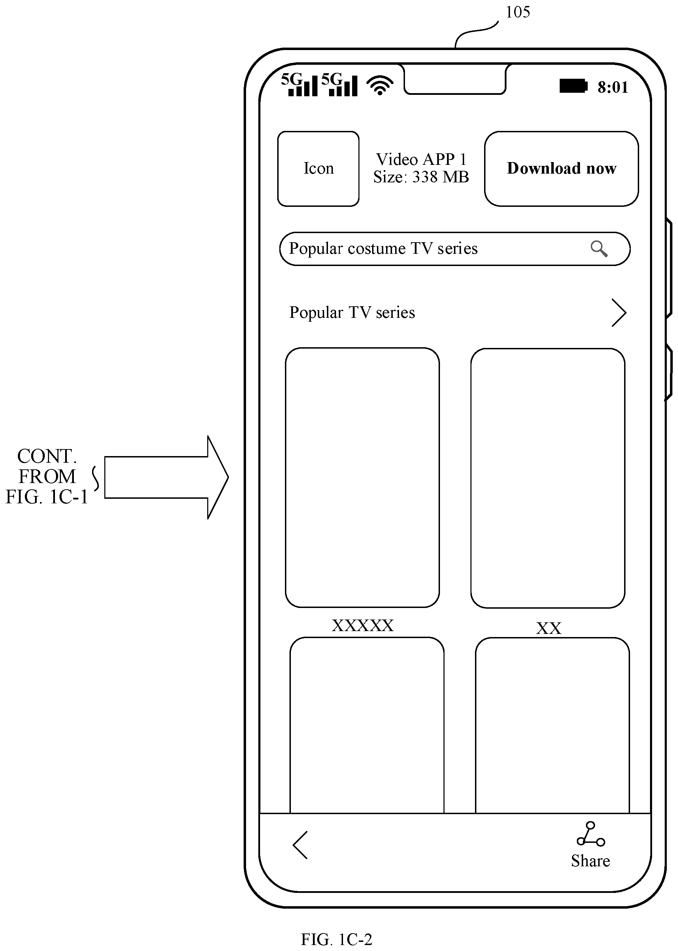

For still another example, FIG. 1C-1 and FIG. 1C-2 are a diagram of still another search scenario. On a search result interface shown in the interface 101, the electronic device may alternatively detect and respond to an operation performed by the user on a control 100, and display an interface 105. The operation on the control 100 indicates to play the TV series *XXX* through a video APP 1. The interface 105 indicates an interface for the user to download the video APP 1. It may be understood that the video APP1 is not installed on the electronic device.

In view of this, an embodiment of this application provides a search result recommendation method. In this method, an electronic device detects a search operation of a user, determines a search result in response to the search operation and with reference to at least one type of device usage information such as historical statistical information of an application usage status of the electronic device, real-time running information of the electronic device, folding form information of the electronic device, or a continuation status of the electronic device, and provides the search result to the user. In this method, the search result is provided with reference to application usage status information obtained at an operating system level of the electronic device and by perceiving usage status information of using the electronic device by the user, so that a search result that better matches a usage habit of the user or a usage status of the device by the user may be obtained, thereby improving user experience of using a search function.

Technical solutions in embodiments of this application may be applied to an electronic device, and the electronic device may be any device that can display an interface. For example, the electronic device may be an electronic device, for example, a mobile phone, a foldable smartphone, a tablet computer, a wearable device (for example, a watch, a band, or the like), a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a smart home device (for example, a smart television), and the like. It may be understood that a specific type of the electronic device is not limited in embodiments of this application.

An example embodiment of the electronic device to which embodiments of this application may be applied may include but is not limited to an electronic device carrying HarmonyOS^{®}, IOS^{®}, Android^{®}, Microsoft^{®}, or another operating system. The electronic device may be, for example, the electronic device described in the foregoing embodiments.

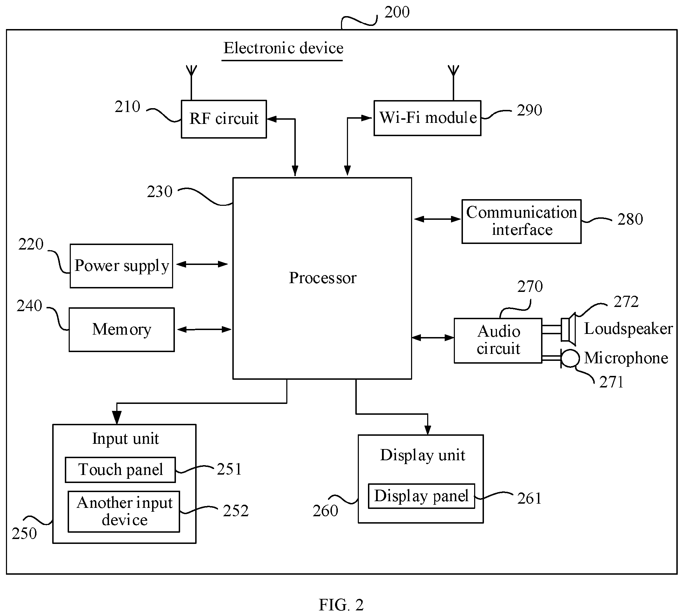

FIG. 2 is a diagram of a possible hardware structure of an electronic device. The electronic device 200 includes components such as a radio frequency (radio frequency, RF) circuit 210, a power supply 220, a processor 230, a memory 240, an input unit 250, a display unit 260, an audio circuit 270, a communication interface 280, and a wireless fidelity (wireless fidelity, Wi-Fi) module 290. A person skilled in the art may understand that the hardware structure of the electronic device 200 shown in FIG. 2 does not constitute a limitation on the electronic device 200. The electronic device 200 provided in this embodiment of this application may include more or fewer components than those shown in the figure, or combine two or more components, or have a different component configuration. Various components shown in FIG. 2 may be implemented in hardware including one or more signal processing and/or application-specific integrated circuits, software, or a combination of hardware and software.

The following specifically describes each component of the electronic device 200 with reference to FIG. 2.

The RF circuit 210 may be configured to receive and send data in a communication or call process. Specifically, after receiving downlink data from a base station, the RF circuit 210 sends the downlink data to the processor 230 for processing, and sends to-be-sent uplink data to the base station. Generally, the RF circuit 210 includes but is not limited to an antenna, at least one amplifier, a transceiver, a coupler, a low noise amplifier (low noise amplifier, LNA), a duplexer, and the like.

In addition, the RF circuit 210 may communicate with another device through a wireless communication network. Any communication standard or protocol may be used for wireless communication, including but not limited to a global system for mobile communications (global system for mobile communications, GSM), a general packet radio service (general packet radio service, GPRS), code division multiple access (code division multiple access, CDMA), wideband code division multiple access (wideband code division multiple access, WCDMA), long term evolution (long term evolution, LTE), an email, a short messaging service (short messaging service, SMS), and the like.

A Wi-Fi technology belongs to a short-range wireless transmission technology. The electronic device 200 may be connected to an access point (access point, AP) by using the Wi-Fi module 290, to access a data network. The Wi-Fi module 290 may be configured to receive and send data in a communication process.

The electronic device 200 may be physically connected to another device through the communication interface 280. Optionally, the communication interface 280 is connected to a communication interface of the another device through a cable, to implement data transmission between the electronic device 200 and the another device.

The electronic device 200 can further implement a communication service and interact with another electronic device. Therefore, the electronic device 200 needs to have a data transmission function. That is, a communication module needs to be included inside the electronic device 200. Although FIG. 2 shows communication modules such as the RF circuit 210, the Wi-Fi module 290, and the communication interface 280, it may be understood that the electronic device 200 includes at least one of the foregoing components or another communication module (for example, a Bluetooth module) configured to implement communication, to perform data transmission.

For example, when the electronic device 200 is a mobile phone, the electronic device 200 may include the RF circuit 210, and may further include the Wi-Fi module 290, or may include the Bluetooth module (not shown in FIG. 2). When the electronic device 200 is a tablet computer, the electronic device 200 may include the Wi-Fi module, or may include the Bluetooth module (not shown in FIG. 2). When the electronic device 200 is a smart home device, the electronic device 200 may include the Wi-Fi module 290, or may include the Bluetooth module (not shown in FIG. 2).

The memory 240 may be configured to store a software program and a module. The processor 230 runs the software program and the module stored in the memory 240, to execute various function applications of the electronic device 200 and data processing. Optionally, the memory 240 may mainly include a program storage area and a data storage area. The program storage area may store an operating system (mainly including software programs or modules respectively corresponding to a kernel layer, a system layer, an application program framework layer, an application program layer, and the like).

In addition, the memory 240 may include a high-speed random access memory, and may further include a non-volatile memory, for example, at least one magnetic disk storage device, a flash memory device, or another volatile solid-state storage device.

The input unit 250 may be configured to receive editing operations of a plurality of different types of data objects such as digit or character information entered by a user, and generate a button signal input related to a user setting and function control of the electronic device 200. Optionally, the input unit 250 may include a touch panel 251 and another input device 252.

The touch panel 251, also referred to as a touchscreen, may collect a touch operation performed by the user on or near the touch panel (for example, an operation performed by the user on the touch panel 251 or near the touch panel 251 by using any proper object or accessory, for example, a finger or a stylus), and drive a corresponding connection apparatus based on a preset program. In this embodiment of this application, the touch panel 251 may collect a user operation performed by the user on the touch panel 251. For example, the user operation may be an operation of entering a search word in a search box, or may be a tap operation on any search result included on a search result interface.

Optionally, the another input device 252 may include but is not limited to one or more of a physical keyboard, an infrared sensor, a function button (for example, a volume control button or a switch button), a tracking ball, a mouse, a joystick, and the like. For example, the infrared sensor may be configured to obtain an air gesture operation of the user.

The display unit 260 may be configured to display information entered by the user or information provided to the user, and various menus of the electronic device 200. The display unit 260 is a display system of the electronic device 200, and is configured to present an interface to implement human-computer interaction. The display unit 260 may include a display panel 261. Optionally, the display panel 261 may be configured in a form of a liquid crystal display (liquid crystal display, LCD), an organic light-emitting diode (organic light-emitting diode, OLED), or the like. In this embodiment of this application, the display unit 260 may be configured to display a user interface. For example, the user interface may display interfaces corresponding to various possible search scenarios, for example, a home page interface of a search APP, a search interface displayed on a desktop interface of the electronic device through a pull-down operation, and a chat interface displayed by waking up a voice assistant. For another example, the user interface may further display a search result interface obtained based on the method provided in embodiments of this application.

The processor 230 is a control center of the electronic device 200, connects to the components through various interfaces and lines, and runs or executes the software program and/or the module stored in the memory 240 and invokes the data stored in the memory 240, to execute various functions of the electronic device 200 and process the data, so as to implement a plurality of services based on the electronic device 200. In this embodiment of this application, the processor 230 may be configured to implement a search result recommendation method provided in embodiments of this application.

The electronic device 200 further includes the power supply 220 (for example, a battery) configured to supply power to the components. Optionally, the power supply 220 may be logically connected to the processor 230 through a power supply management system, to implement functions such as charging management, discharging management, and power consumption management through the power supply management system.

As shown in FIG. 2, the electronic device 200 further includes the audio circuit 270, a microphone 271, and a loudspeaker 272, and may provide an audio interface between the user and the electronic device 200. The audio circuit 270 may be configured to convert audio data into a signal that can be identified by the loudspeaker 272, and transmit the signal to the loudspeaker 272. The loudspeaker 272 converts the signal into a sound signal for output. The microphone 271 is configured to collect an external sound signal (for example, a sound of person speaking or another sound), convert the collected external sound signal into a signal that can be identified by the audio circuit 270, and send the signal to the audio circuit 270. The audio circuit 270 may be further configured to convert the signal sent by the microphone 271 into audio data, and then output the audio data to the RF circuit 210 for sending to, for example, another electronic device, or output the audio data to the memory 240 for subsequent processing.

Although not shown in FIG. 2, the electronic device 200 may further include a camera, at least one sensor, and the like. Details are not described herein. The at least one sensor may include but is not limited to a pressure sensor, a barometric pressure sensor, an acceleration sensor, a distance sensor, a fingerprint sensor, a touch sensor, a temperature sensor, and the like.

The operating system (operating system, OS) in this embodiment of this application is the most basic system software running on the electronic device 200. A software system of the electronic device 200 may use a layered architecture, an event-driven architecture, a microkernel architecture, a microservice architecture, or a cloud architecture. In this embodiment of this application, an operating system using a layered architecture is used as an example to describe a software architecture of the electronic device 200.

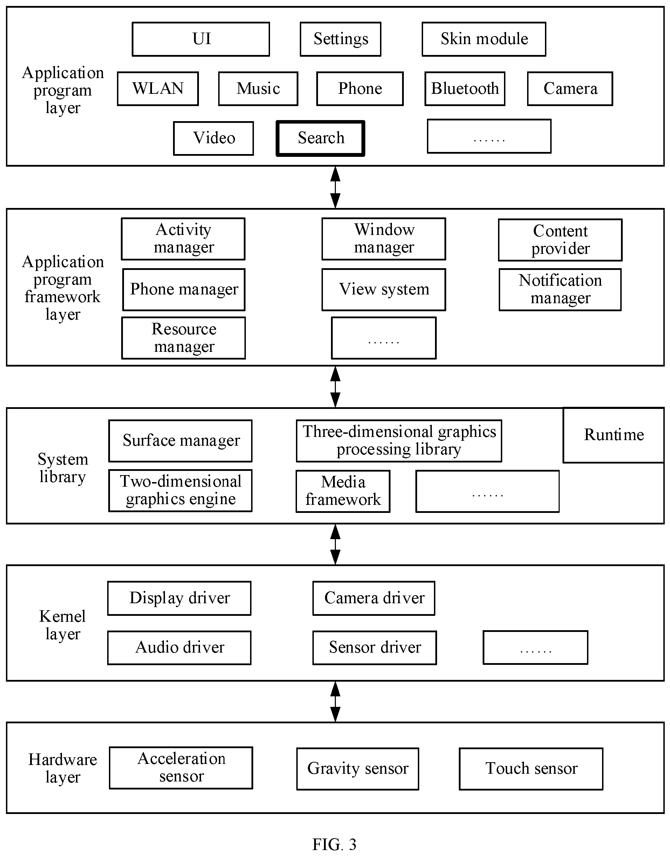

FIG. 3 is a block diagram of a software architecture of an electronic device according to an embodiment of this application. As shown in FIG. 3, the software architecture of the electronic device may be a layered architecture. For example, software may be divided into several layers, and each layer has a clear role and responsibility. The layers communicate with each other through a software interface. In some embodiments, an operating system is divided into five layers: an application program layer, an application program framework (framework, FWK) layer, a runtime and a system library, a kernel layer, and a hardware layer from top to bottom.

The application program layer may include a series of application program packages. As shown in FIG. 3, the application program layer may include a user interface (user interface, UI), Camera, Settings, a skin module, a third-party application program, and the like. The third-party application program may include, for example, a wireless local area network (wireless local area network, WLAN), Music, Phone, Bluetooth, Video, Search, and the like. In this embodiment of this application, the application program layer may further provide an application program used to implement a desktop-based search function and an application program used to implement a voice assistant-based search function.

In a possible implementation, an application program may be developed by using a java language, and is completed by invoking an application programming interface (application programming interface, API) provided by the application program framework layer. A developer may interact with a bottom layer (for example, the hardware layer and the kernel layer) of the operating system through the application program framework layer, to develop an application program of the developer. The application program framework layer mainly includes a series of services and management systems of the operating system.

The application program framework layer provides the application programming interface and a programming framework for an application program at the application program layer. The application program framework layer includes some predefined functions. As shown in FIG. 3, the application program framework layer may include a view system, an activity manager, a window manager, a content provider, a phone manager, a resource manager, a notification manager, and the like.

The activity manager is configured to manage a life cycle of each application program, provide a common navigation rollback function, and provide an interaction interface for windows of all programs.

The window manager is configured to manage a window program. The window manager may obtain a size of a display, determine whether there is a status bar, perform screen locking, take a screenshot, and the like.

The content provider is configured to store and obtain data, and enable the data to be accessed by an application program. The data may include a video, an image, an audio, calls that are made and answered, a browsing history and bookmarks, an address book, and the like.

The view system includes a visual control and an invisible control, for example, a control for displaying text and a control for displaying a picture. The view system may be configured to construct an application program. A display interface may include one or more views. For example, a display interface including an SMS message notification icon may include a view for displaying text and a view for displaying a picture.

The phone manager is configured to provide a communication function of the electronic device, for example, management of a call status (including answering, declining, or the like).

The resource manager provides various resources such as a localized character string, an icon, a picture, a layout file, a video file, and the like for an application program.

The notification manager enables an application program to display notification information in a status bar, and may be configured to convey a notification-type message. The notification manager may automatically disappear after a short pause without user interaction. For example, the notification manager is configured to notify download completion, give a message notification, and the like. The notification manager may alternatively be a notification that appears in a top status bar of the system in a form of a graph or scroll bar text, for example, a notification of an application program that is run on a background, or may be a notification that appears on a screen in a form of a dialog window. For example, text information is prompted in the status bar, a prompt tone is given, the electronic device vibrates, or an indicator light blinks.

The runtime includes a core library and a virtual machine. The runtime is responsible for scheduling and management of the operating system.

The core library includes two parts: a function that needs to be invoked in the java language, and a core library of the operating system. The application program layer and the application program framework layer run on the virtual machine. The virtual machine executes java files of the application program layer and the application program framework layer as binary files. The virtual machine is configured to implement functions such as object lifecycle management, stack management, thread management, security and exception management, and garbage collection.

The system library may include a plurality of functional modules, for example, a surface manager (surface manager), a media framework (media framework), a three-dimensional graphics processing library (for example, OpenGL ES), and a two-dimensional graphics engine (for example, SGL).

The surface manager is configured to manage a display subsystem and provide fusion of two-dimensional and 3D layers for a plurality of application programs.

The media framework supports playback and recording of audios and videos in a plurality of commonly used formats, static image files, and the like. The media framework may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for two-dimensional drawing. The two-dimensional graphics engine may perform a drawing operation, to draw a search interface, a search result interface, and the like on a screen.

In some embodiments, the three-dimensional graphics processing library may be configured to draw a three-dimensional motion trajectory image, and the two-dimensional graphics engine may be configured to draw a two-dimensional motion trajectory image.

The kernel layer is a layer between hardware and software. The kernel layer at least includes a display driver, a camera driver, an audio driver, and a sensor driver.

The hardware layer may include various sensors such as an acceleration sensor, a gravity sensor, and a touch sensor.

Generally, the electronic device 200 may run a plurality of application programs at the same time. In a simple case, one application program may correspond to one process, and in a complex case, one application program may correspond to a plurality of processes. Each process has a process number (process ID).

It should be understood that "at least one of the following pieces (items)" or a similar expression thereof in embodiments of this application indicates any combination of these items, and includes a singular item (piece) or any combination of a plurality of items (pieces). For example, at least one of a, b, or c may represent: a, b, c, a and b, a and c, b and c, or a, b and c, where a, b, and c may be singular or plural. "A plurality of" refers to two or more than two. "And/or" is used to describe an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects.

In addition, it should be understood that in descriptions of this application, terms such as "first" and "second" are merely used for distinguishing and description, but should not be understood as indicating or implying relative importance, or should not be understood as indicating or implying a sequence. For example, "a first search result set" and "a second search result set" in the following embodiments are only used to distinguish and describe different search result sets, and are not used to limit specific content.

It should be understood that the hardware structure of the electronic device may be shown in FIG. 2, and a software system architecture may be shown in FIG. 3. The software program and/or the module corresponding to the software system architecture of the electronic device may be stored in the memory 240. The processor 230 may run the software program and an application that are stored in the memory 240, to perform a procedure of the search result recommendation method provided in embodiments of this application.

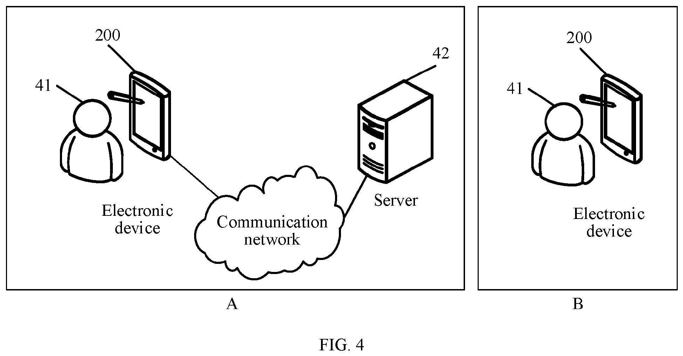

FIG. 4 is a diagram of a system architecture to which a search result recommendation method according to an embodiment of this application is applicable.

A in FIG. 4 shows a possible system architecture A. The system architecture scenario may include, for example, an electronic device 200, a user 41, and a server 42.

The electronic device 200 may be configured to obtain a search word based on a search instruction of the user 41; send a search request message to the server 42; and receive a first search result set provided by the server 42. In addition, the electronic device 200 may be further configured to obtain device usage information, adjust the first search result set based on the device usage information to obtain a second search result set, and provide the second search result set to the user. Optionally, the electronic device 200 may adjust the first search result set in, but not limited to, at least one of the following manners: screening and re-sorting.

The device usage information may include but is not limited to at least one of the following information:
1) Historical statistical information of an application usage status of the electronic device, which may be used to reflect a usage preference of the user and a usage habit of the user, so that a determined search result may better fit the usage preference of the user and better match the usage habit of the user. For example, the historical statistical information of the application usage status may include but is not limited to: usage duration of an APP, quantity of opening times information of the APP, and last opening time information of the APP.
2) Real-time running information of the electronic device, which may be used to reflect a current running status of the electronic device, so that the determined search result may better match the current running status of the electronic device, thereby obtaining better viewing experience, for example, reducing loading time. For example, the real-time running information may include but is not limited to background residing information of the APP, network status information, remaining battery level information, running memory information, and storage space information.
3) Folding form information of the electronic device, which may be used to perceive a usage status of the electronic device by the user, so that the determined search result may better match a folding form, thereby obtaining different search results in various forms, and obtaining better viewing experience. The folding form information may include a folded form and an unfolded form.
4) Continuation status information of the electronic device, which may be used to perceive a service processing status of the electronic device, so that the determined search result better matches the service processing status, thereby obtaining different search results in various service processing statuses, and obtaining better viewing experience. The service processing status may include a single-device processing state and a multi-device processing state. The multi-device processing state may include a continued state in which the electronic device continues a service to another electronic device and the another electronic device assists the electronic device in performing an operation such as processing, storage, display, or play of information. It may also be understood that the continuation status information includes a continued state and a non-continued state.

The server 42 may be configured to receive the search request message from the electronic device 200; and determine the first search result set based on the search word carried in the search request message, and send the first search result set to the electronic device.

B in FIG. 4 shows another possible system architecture B. A difference between the system architecture B and the system architecture A lies in that the method provided in this embodiment of this application may alternatively be implemented by the electronic device 200.

The electronic device 200 may be configured to obtain a search word based on a search instruction of the user 41; and obtain device usage information. Then, the electronic device 200 determines a second search result set based on the device usage information and the search word, and provides the second search result set to the user.

For example, the electronic device 200 may first determine a first search result set based on the search word, and then adjust the first search result set based on the device usage information, to obtain the second search result set.

For another example, the electronic device 200 may alternatively directly determine the second search result set based on the device usage information and the search word.

The device usage information may include but is not limited to at least one of the following information: historical statistical information of an application usage status of the electronic device, real-time running information of the electronic device, folding form information of the electronic device, or continuation status information of the electronic device.

It may be understood that a specific scenario of the system architecture is not limited in this embodiment of this application. For example, the server 42 may be further connected to more electronic devices, so that a more accurate first search result set may be generated for the electronic device 200 with reference to feedback information on a plurality of electronic devices.

Based on the diagram of the system architecture described in FIG. 4, the following describes several possible search scenarios in embodiments of this application by using an example in which the electronic device is a mobile phone.

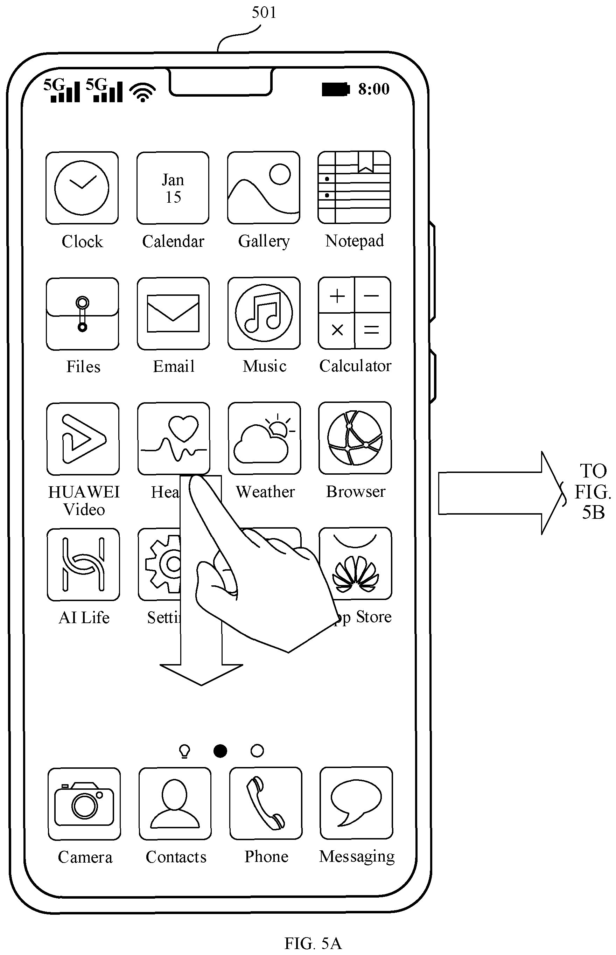

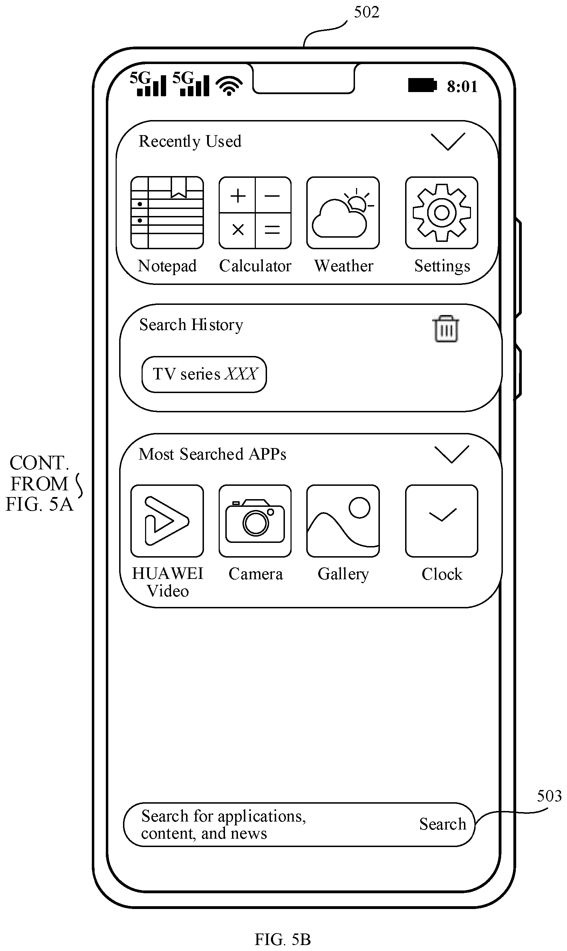

**Search scenario A:** FIG. 5A and FIG. 5B are a diagram of a scenario to which a search result recommendation method according to an embodiment of this application is applicable. An interface 501 in FIG. 5A is a diagram of a desktop of the mobile phone. On the interface 501, the electronic device may display an interface 502 in response to a pull-down operation on the desktop. The interface 502 is a possible search interface, and the interface 502 includes at least a search box 503. The search box 503 may be used to provide, to a user, an entry for entering a search word. It should be noted that specific content and a display form included on the interface 502 are not limited in this embodiment of this application. For example, the search box 503 may be located at a bottom of the search interface shown in the interface 502, or may be located at a top of the search interface.

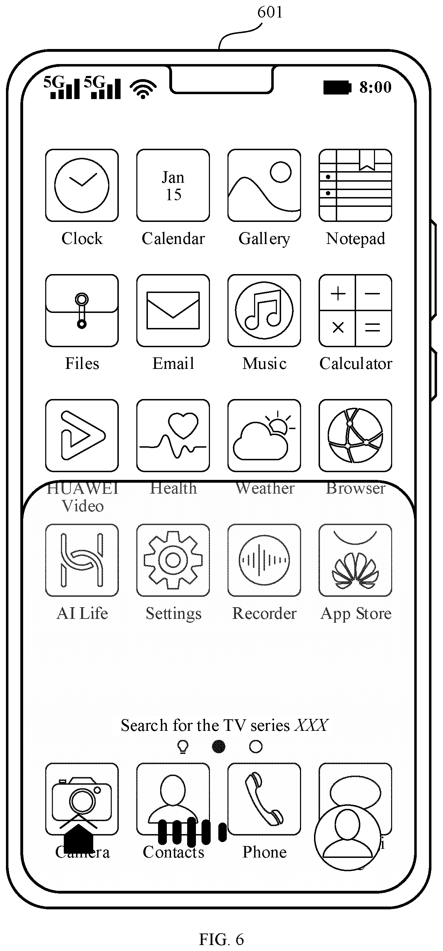

**Search scenario B:** FIG. 6 is a diagram of another scenario to which a search result recommendation method according to an embodiment of this application is applicable. As shown in an interface 601 in FIG. 6, in a scenario in which the electronic device displays a desktop interface, the electronic device may detect and respond to a voice instruction, and display the interface 601. The interface 601 is a chat interface displayed after a voice assistant is woken up. It can be learned from the interface 601 that the voice instruction may be "Search for the TV series *XXX".* It should be noted that, in this embodiment of this application, the voice instruction is not limited to being detected only when the electronic device displays the desktop interface, and the voice instruction can be detected when the electronic device displays any possible interface.

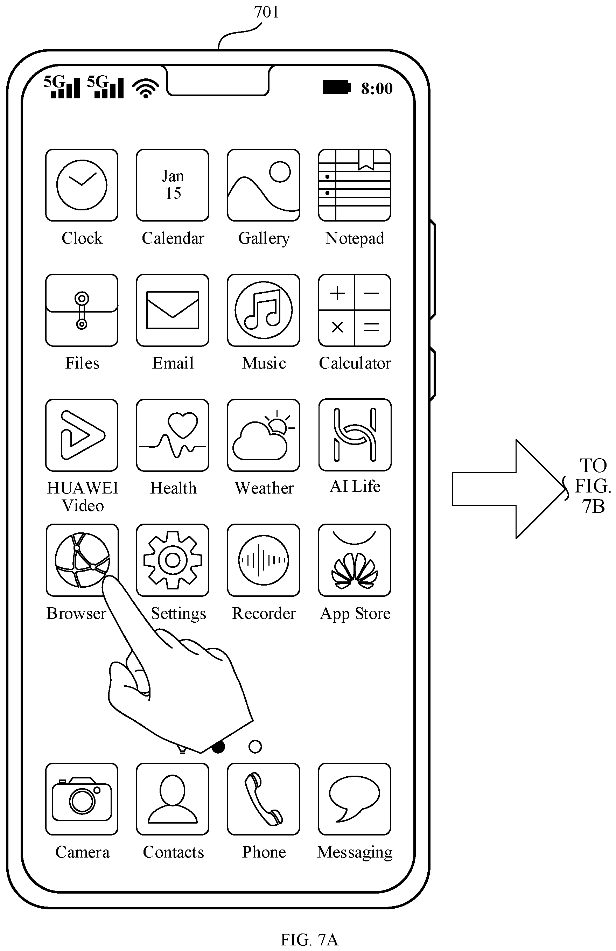

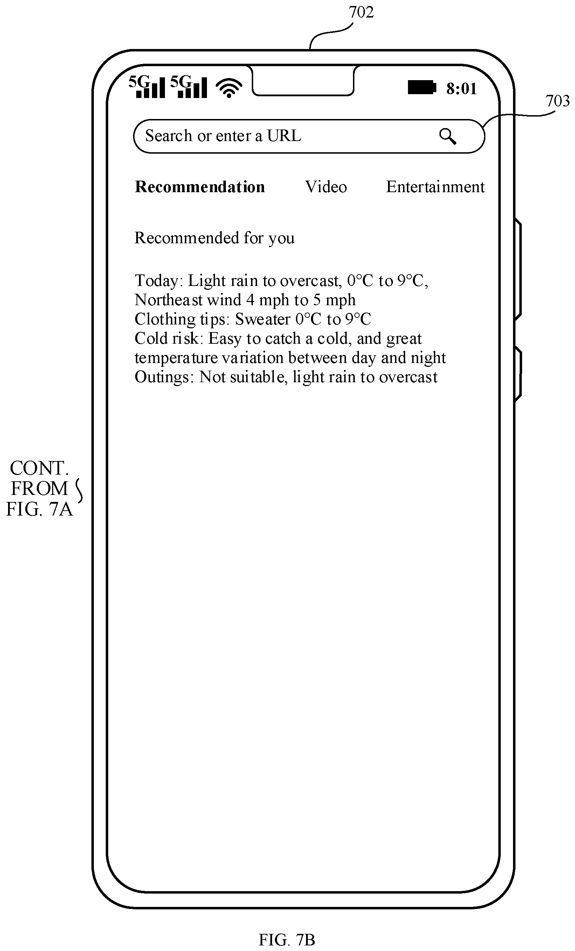

**Search scenario C:** FIG. 7A and FIG. 7B are a diagram of still another scenario to which a search result recommendation method according to an embodiment of this application is applicable. As shown in an interface 701 in FIG. 7A, in a scenario in which the electronic device displays a desktop interface, the electronic device may detect and respond to a tap operation performed on a browser APP, and display an interface 702. The interface 702 is a home page interface of the browser APP, and is another possible search interface, and the interface 702 includes at least a search box 703. The search box 703 may be used to provide, to a user, an entry for entering a search word. It should be noted that specific content and a display form included on the interface 702 are not limited in this embodiment of this application. For example, the search box 703 may be located at a top of the search interface shown in the interface 702, or may be located at a bottom of the search interface, and the interface 702 may further include other recommended content. It may be understood that the browser APP is a search APP.

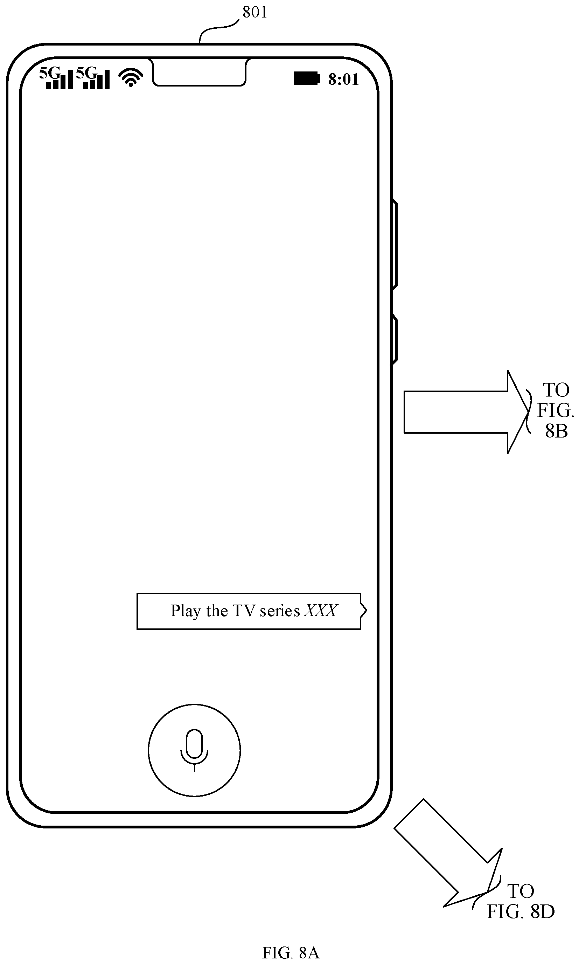

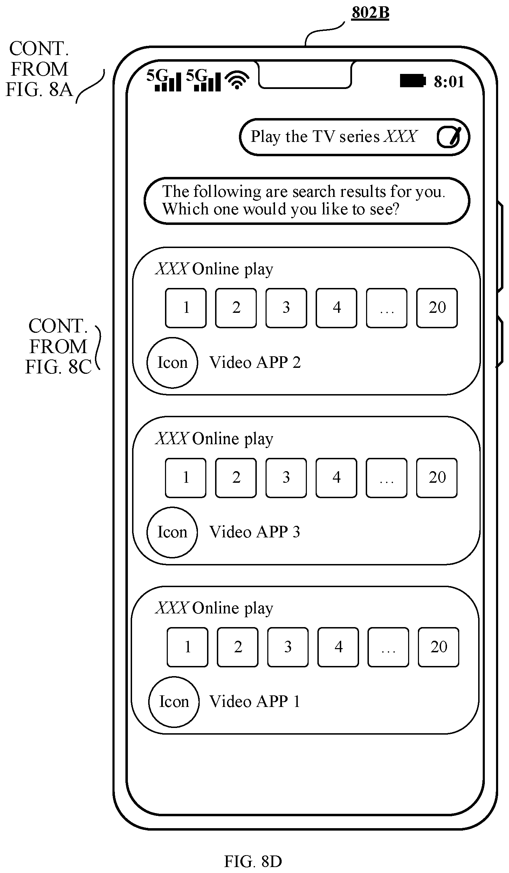

Based on the several search scenarios described in FIG. 5A to FIG. 7B, the following describes an implementation process of the method provided this application by using the search scenario B as an example and with reference to content shown in FIG. 8A to FIG. 13F, to understand an interface display effect that can be achieved by using the method provided in this application. For an implementation process in another search scenario, refer to the implementation process in the search scenario B. Details are not described in this application again. It should be noted that, for ease of understanding, the following uses an example in which a search result is provided in an interface display manner. In embodiments of this application, the search result is not limited to being provided in the interface display manner. For example, the search result may alternatively be provided in a voice broadcast manner.

The following describes several possible interface display effects that may be involved in the method provided in this application.

### Scenario 1:

FIG. 8A to FIG. 8D are a display interface of a search result recommendation method according to an embodiment of this application. It should be noted that, in this scenario, an example in which the electronic device is a mobile phone is used. For an implementation process of another type of electronic device, refer to the implementation process of the mobile phone. Details are not described in this application again.

An interface 801 shown in FIG. 8A is a possible interface displayed when the mobile phone detects and responds to a voice instruction, where the voice instruction is "Play the TV series *XXX".* The interface 801 may be further configured to display a recognition result of the voice instruction to the user, so that the user confirms or adjusts the recognition result of the voice instruction. It should be noted that a specific form and specific content of the interface 801 are not limited in this embodiment of this application.

In a possible example, based on the interface 801, the mobile phone may further display an interface 802A in response to successfully recognizing the voice instruction. The interface 802A may be understood as a search result interface obtained before the method provided in this embodiment of this application is used. On the interface 802A, three search results are provided as an example, and a display sequence of the three search results is: a search result from a video APP 1, a search result from a video APP 2, and a search result from a video APP 3. It should be noted that a specific form and specific content of the interface 802A are not limited in this embodiment of this application. The search results displayed on the interface 802A may be generally determined based on network information like a user CTR.

In another possible example, based on the interface 801, the mobile phone may alternatively display an interface 802B in response to successfully recognizing the voice instruction and with reference to historical statistical information of an APP usage status obtained by the electronic device. The interface 802B may be understood as a search result interface obtained after the method provided in this embodiment of this application is used.

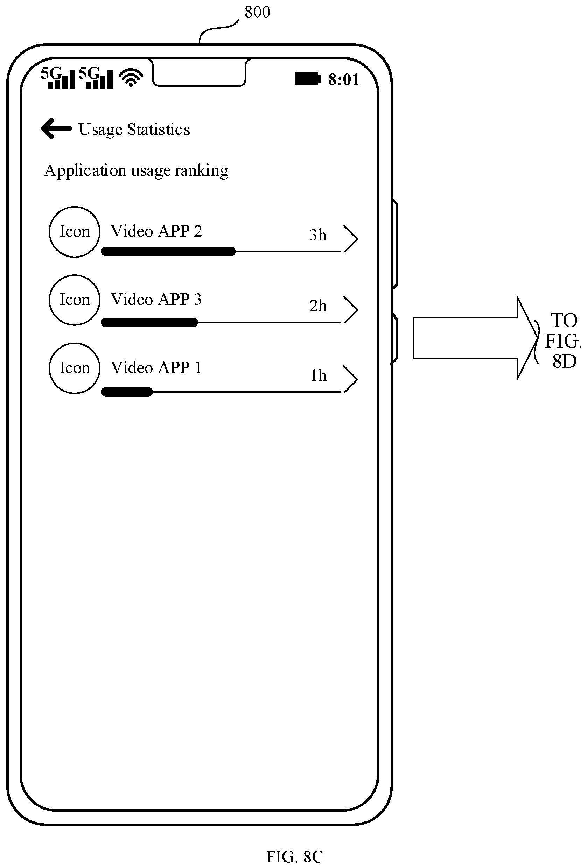

For example, the historical statistical information of the APP usage status may be shown on an interface 800 in FIG. 8C. The historical statistical information of the APP usage status may be: usage duration of the video APP 2 is 3 hours (h), usage duration of the video APP 3 is 2 h and usage duration of the video APPl is 1 h. It may be understood that, the usage duration of the video APP 2 is greater than the usage duration of the video APP 3, and the usage duration of the video APP 3 is greater than the usage duration of the video APP 1. In addition, based on the historical statistical information of the APP usage status on the interface 800, a usage preference of the user on the APP in a specified historical time period (for example, one day or today) may be reflected. To be specific, the user is more accustomed to watching a video on the video APP 2 recently.

On the interface 802B, three search results are still provided as an example. However, compared with the display sequence on the interface 802A, a display sequence of the three search results is different. The display sequence of the three search results on the interface 802B is: the search result from the video APP 2, the search result from the video APP 3, and the search result from the video APP 1. With reference to the interface 800 and the interface 802B, it can be learned that the mobile phone may obtain a search result based on the historical statistical information of the APP usage status. Therefore, according to the method provided in this embodiment of this application, the search result may better fit the usage preference of the user, and better match a usage habit of the user, thereby improving user experience.

It should be noted that a specific form and specific content of the interface 802B are not limited in this embodiment of this application. For example, more or fewer search results may be displayed.

In addition, it should be further noted that, in addition to the historical statistical information of the APP usage status, a search result may also be obtained based on other historical statistical information of the application usage status. For example, the other historical statistical information of the application usage status may include but is not limited to: quantity of opening times information of an APP, where for example, a larger quantity of opening times of an APP indicates a higher rank of a search result from the APP in a display sequence; and last opening time information of the APP, where for example, shorter time since last opening time of an APP indicates a higher rank of a search result from the APP in a display sequence.

It should be noted that, in this embodiment of this application, a source of the search result is not limited to an APP that has been installed on the mobile phone, and may alternatively be a quick application, an applet, a web page, or the like that is not installed on the mobile phone.

In this scenario, the mobile phone obtains APP usage statistics information in a historical dimension at an operating system level, to apply the historical statistical information of the APP usage status to a processing process of determining a search result, so that a provided search result may better fit the usage preference of the user, and better match the usage habit of the user, thereby improving user experience of using a search function.

### Scenario 2:

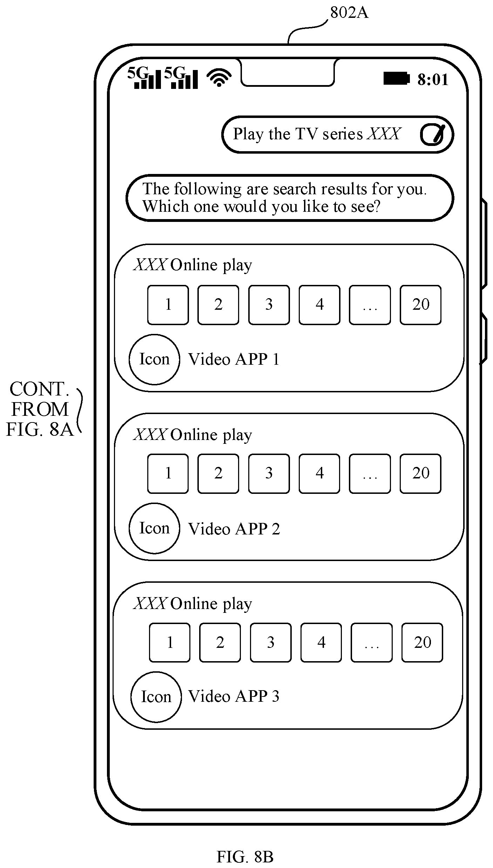

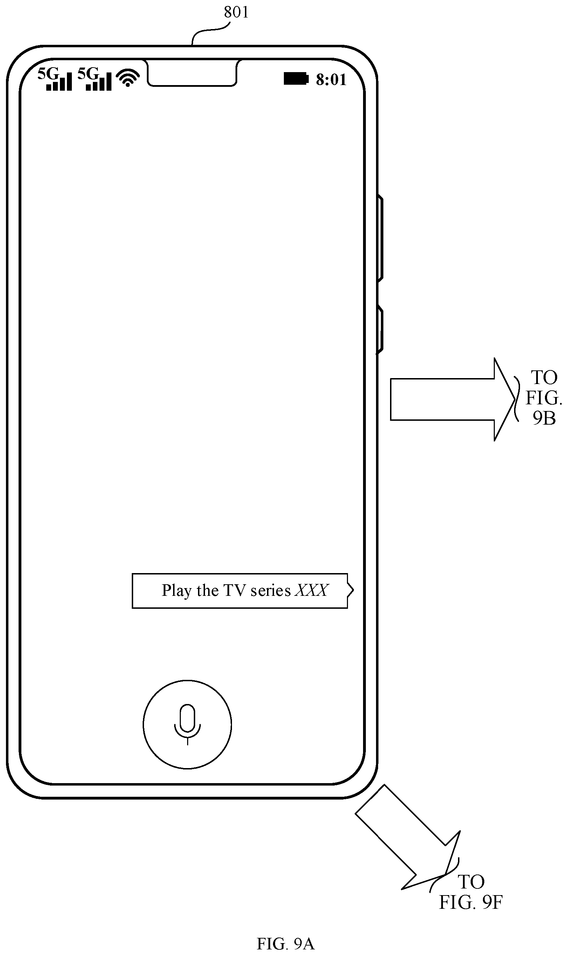

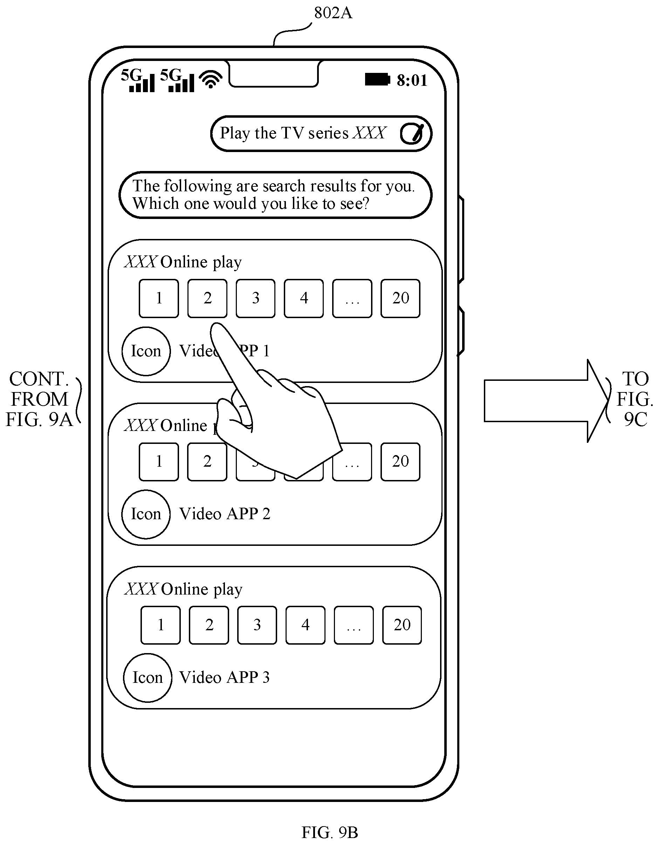

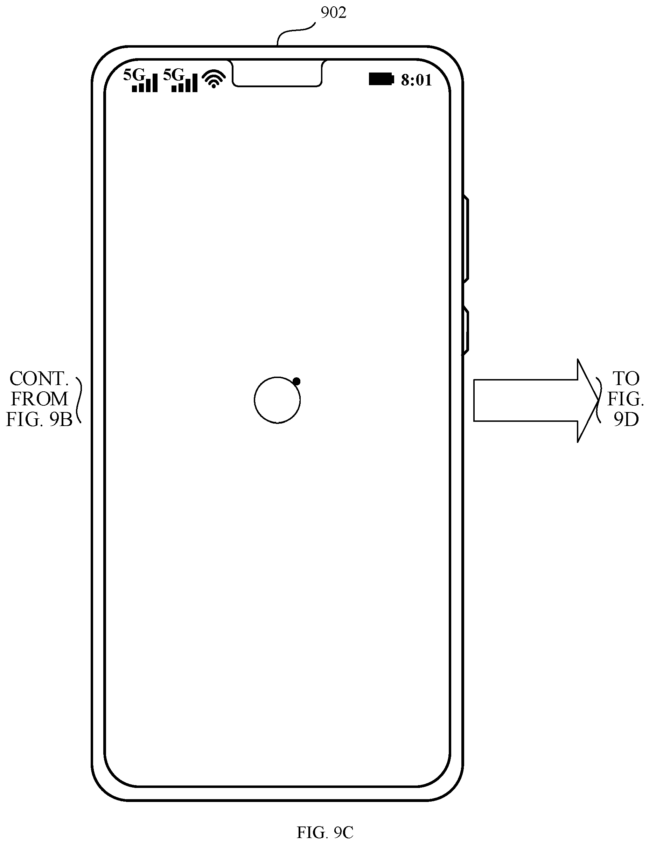

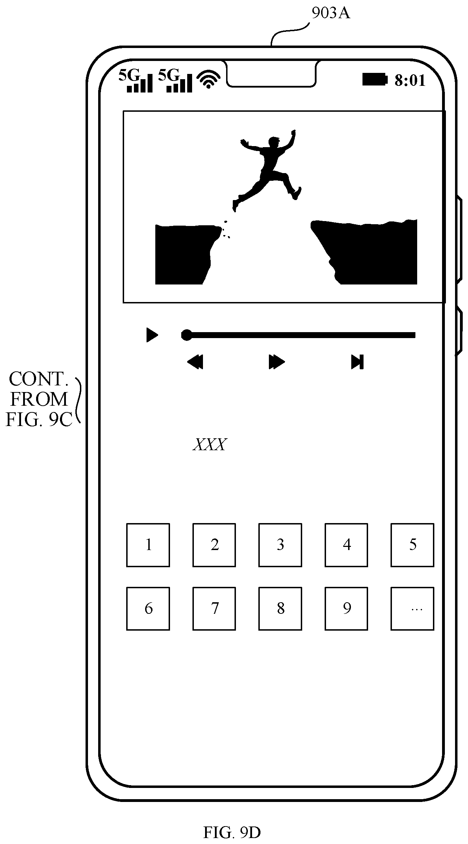

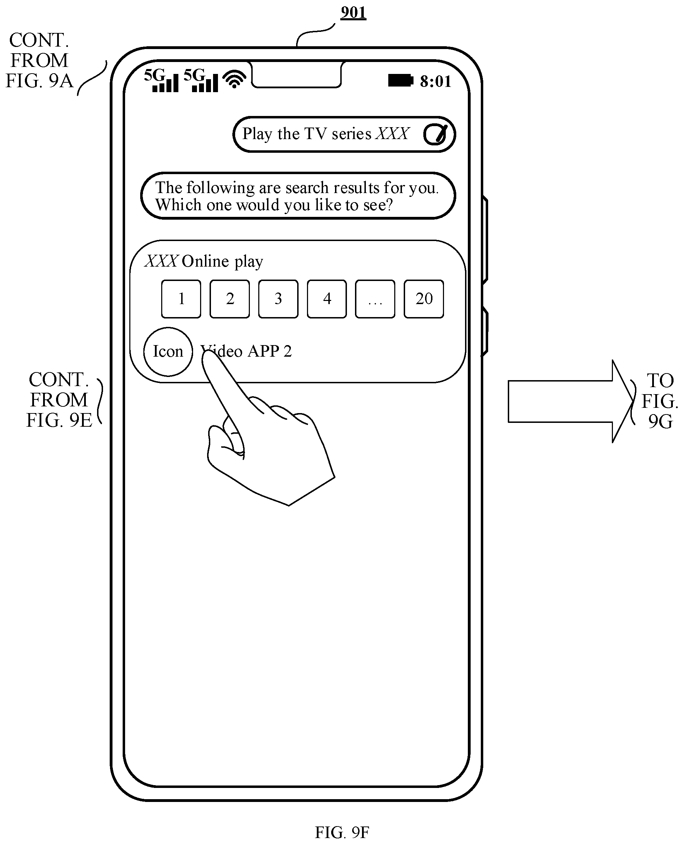

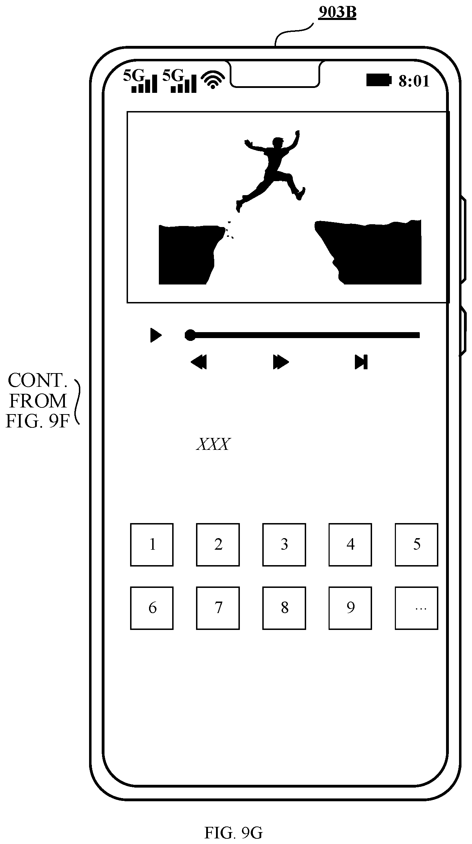

FIG. 9A to FIG. 9G are another display interface of a search result recommendation method according to an embodiment of this application. It should be noted that, in this scenario, an example in which the electronic device is a mobile phone is used. For an implementation process of another type of electronic device, refer to the implementation process of the mobile phone. Details are not described in this application again. For an interface 801 and an interface 802A shown in FIG. 9A and FIG. 9B, refer to the description content in FIG. 8A and FIG. 8B. Details are not described herein again.

In still another possible example, based on the interface 801, the mobile phone may alternatively display an interface 901 in response to successfully recognizing a voice instruction and with reference to background residing information of an APP. The interface 901 may be understood as a search result interface obtained after the method provided in this embodiment of this application is used.

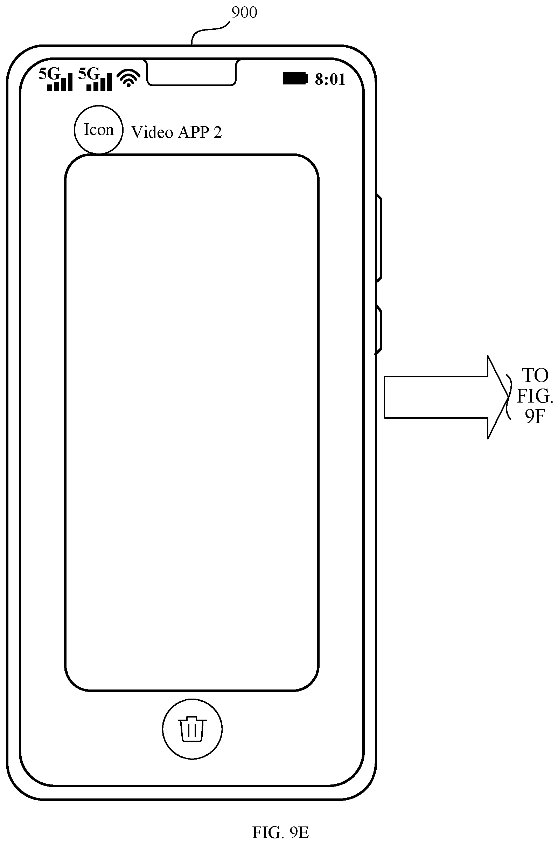

For example, the background residing information of the APP may be shown on an interface 900 in FIG. 9E, and the mobile phone detects that a video APP 2 resides in a background. It may also be understood that a video APP 1 and a video APP 3 do not reside in the background. In addition, based on the background residing information of the APP on the interface 900, a current running status of each APP on the mobile phone may be reflected.

Optionally, the search result interface shown in the interface 901 may include a search result from the video APP 2. With reference to the interface 900 and the interface 901, it can be learned that the mobile phone may obtain a search result based on the background residing information of the APP.

It should be noted that a specific form and specific content of the interface 901 are not limited in this embodiment of this application. For example, when the mobile phone detects that a plurality of APPs reside in the background, more search results may be displayed on the search result interface. For another example, the mobile phone may display a search result from an APP that resides in the background in a front position of the search result interface, and display a search result from an APP that does not reside in the background in a rear position of the search result interface. For example, compared with the search result interface shown in the interface 901, another search result interface may be an interface on which the search result from the video APP 2 is displayed in a top position, a search result from the video APP 1 is displayed below the search result from the video APP 2, and a search result from the video APP 3 is displayed below the search result from the video APP 1.

In this scenario, the mobile phone obtains real-time running information of the APP, to obtain the search results, so that the search result from the APP residing in the background may be displayed in a more obvious position.

In this way, in this scenario, jumping time required for viewing the search result may be reduced, thereby improving user experience. For example, when the mobile phone displays the interface 802A, the mobile phone detects and responds to a user operation performed on the search result from the video APP 1. Generally, an intermediate loading interface shown in an interface 902 needs to be displayed first, and a playback interface shown in an interface 903A is displayed after loading is completed. For another example, when the mobile phone displays the interface 901, the mobile phone detects and responds to a user operation performed on the search result from the video APP 2. Based on the video APP 2 residing in the background, the mobile phone can quickly jump to a playback interface shown in an interface 903B. Therefore, according to the method provided in this embodiment of this application, the mobile phone can preferentially start the APP residing in the background, so that reloading time required in an APP jumping process can be shortened, thereby improving user experience.

In addition, in addition to the background residing information of the APP, a search result may alternatively be obtained based on other real-time running information. For example, the other real-time running information may include but is not limited to network status information, remaining battery level information, running memory information, and storage space information. The network status information may include: a network type, for example, 2G, 3G, 4G, 5G, or Wi-Fi; and network speed information.

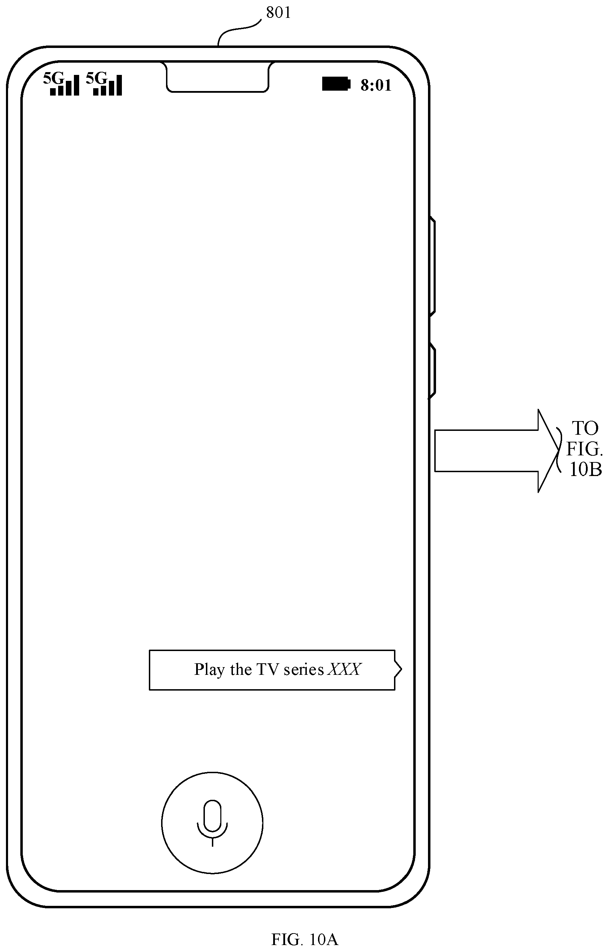

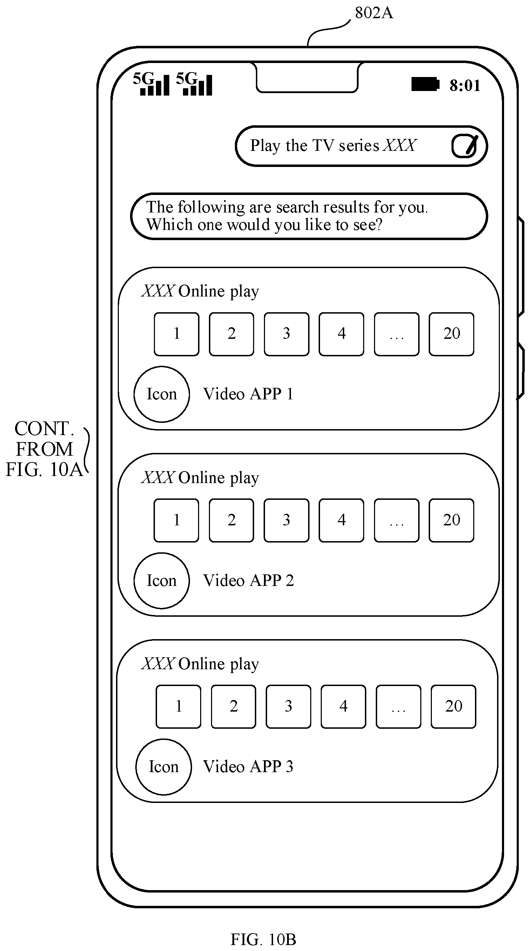

Using an example in which the network status information is a network type, FIG. 10A to FIG. 10D are still another display interface of a search result recommendation method according to an embodiment of this application. An interface 801 and an interface 802A are, for example, interface display effects in a search scenario in which the network type is 5G. For a specific implementation process, refer to the description content in FIG. 8A and FIG. 8B. Details are not described herein again.

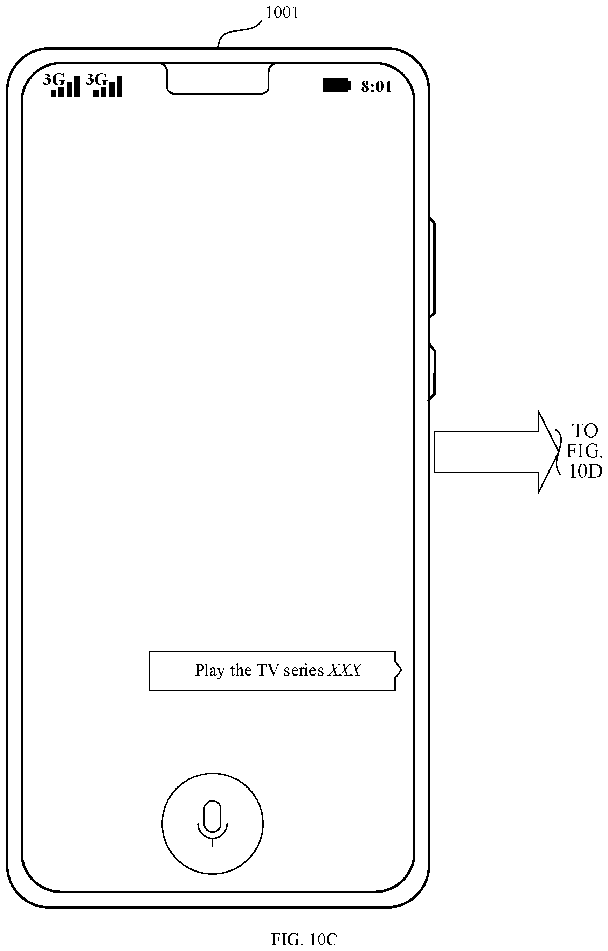

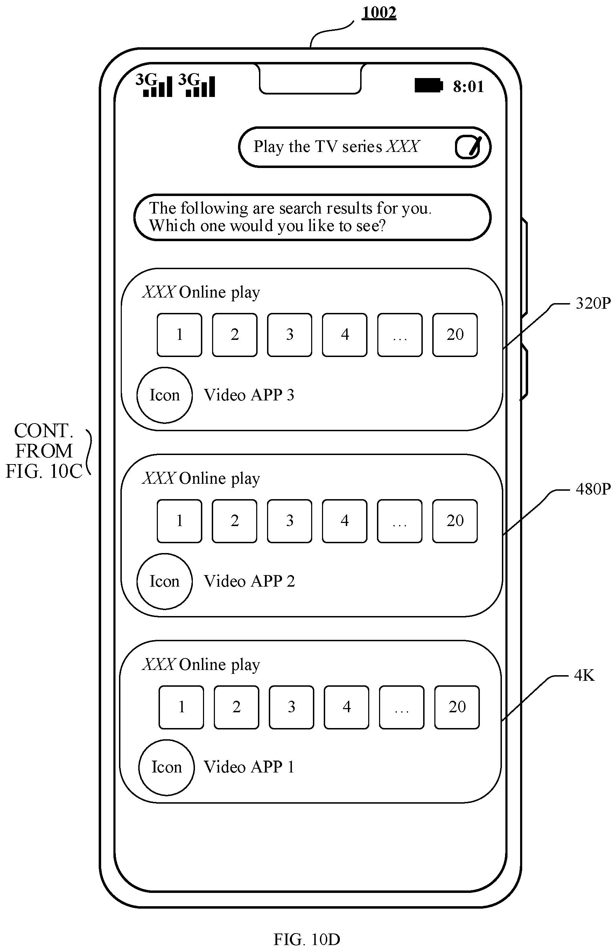

As shown in an interface 1001 in FIG. 10C, when the mobile phone detects that the network type is 3G, a recognition result interface of a voice instruction is similar to the interface 801. An interface 1002 in FIG. 10D is a search result interface displayed by the mobile phone. On the interface, three search results are still provided as an example. However, compared with the interface 802A, a display sequence of the three search results is different. The display sequence of the three search results on the interface 1002 is: the search result from the video APP 3, the search result from the video APP 2, and the search result from the video APP 1. It may be understood that a 3G network status is poorer than a 5G network status. In addition, a network status threshold may be set. When different network statuses are met, video formats matching different network statuses are preconfigured. For example, a video format matching the 3G network status may be 320P (a video format), a video format matching a 4G network status may be 1080P (a video format), and a video format matching the 5G network status may be 4K (a video format).

A video from the video APP 3 is a 320P video, and has a low requirement on a network status. A video from the video APP 2 is a 480P video, and has a higher requirement on a network status than the 320P video. A video from the video APP 1 is a 4K video, and has a higher requirement on a network status than the 480P video. It should be noted that a specific form and specific content of the interface 1002 are not limited in this embodiment of this application. For example, the interface 1002 may further include more or fewer search results. For example, when detecting that the network type is 2G, the electronic device may no longer display the video from the video APP 1, and display only the video from the video APP 2 and the video from the video APP 3, namely, display two search results in total.

In this way, the mobile phone may obtain search results based on the network status information and requirements of the search results on a network status. Therefore, when detecting that a network status is poor, the mobile phone preferentially displays a search result corresponding to a video that has a low requirement on a network status, so that experience of viewing the search result by the user can be improved, and a probability of frame freezing during video viewing may be reduced. In addition, it may be further understood that, when detecting that a network status is good, the mobile phone may alternatively preferentially display a video with a higher definition, so that viewing experience of the user can be improved while playback smoothness is ensured.

It should be noted that, in this embodiment of this application, a source of the search result is not limited to an APP that has been installed on the mobile phone, and may alternatively be a quick application, an applet, a web page, or the like that is not installed on the mobile phone.

It should be further noted that, the implementation processes described in FIG. 9A to FIG. 10D in the foregoing scenarios may further be integrated. It may also be understood that the mobile phone may obtain a search result based on the background residing information of the APP and the network status information. For example, the electronic device may first screen, based on the background residing information of the APP, videos from APPs residing in the background, to obtain a plurality of search results; and then the electronic device re-sorts the plurality of screened search results based on the network status information, to obtain a plurality of re-sorted search results, and provides the re-sorted search results to the user. In this way, when there are a large quantity of search results, more device usage information obtained by the electronic device may be used to obtain search results or adjust search results obtained based on network information like a user CTR.

### Scenario 3:

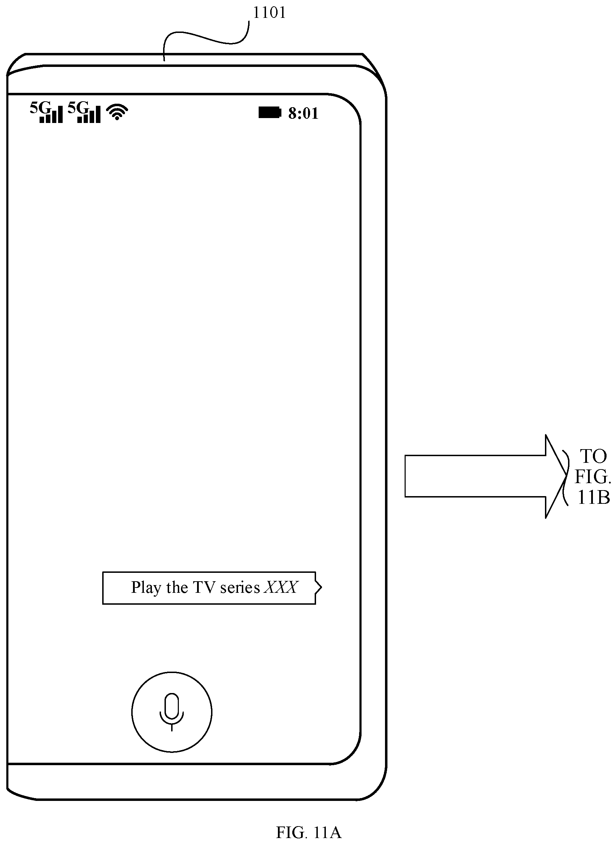

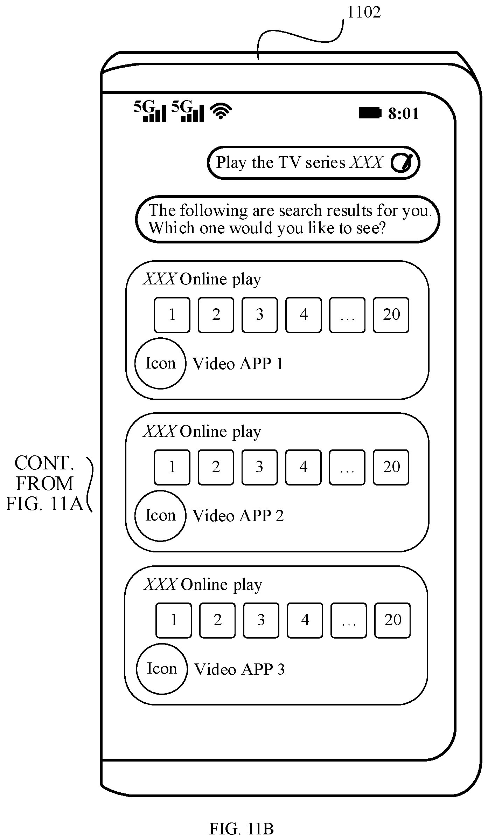

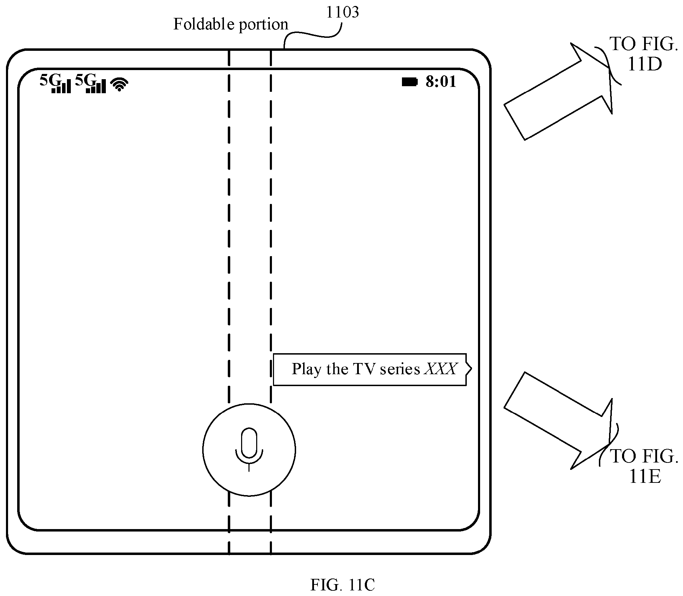

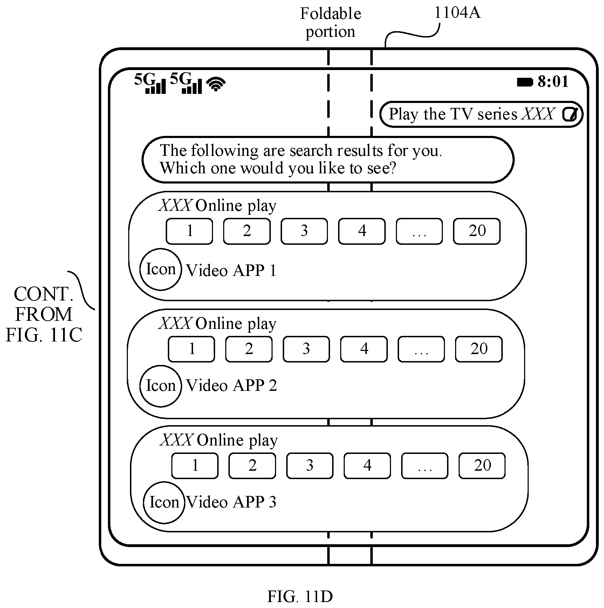

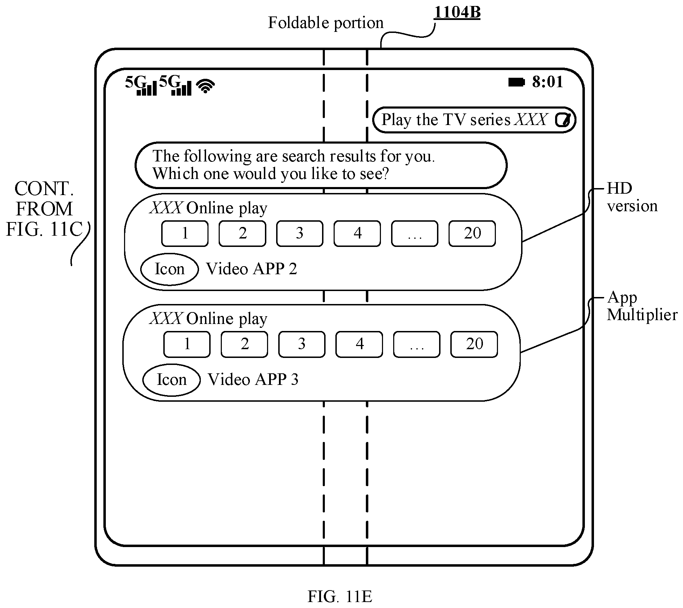

FIG. 11A to FIG. 11E are still another display interface of a search result recommendation method according to an embodiment of this application. It should be noted that, in this scenario, an example in which the electronic device is a foldable smartphone is used. For an implementation process of another type of electronic device, refer to an implementation process of the foldable smartphone. Details are not described in this application again.

Based on the foldable smartphone having two device forms: a folded form and an unfolded form, this scenario may include two cases:
Scenario 3-1). An interface 1101 shows a search interface of the foldable smartphone in the folded form; and an interface 1102 shows a search result interface of the foldable smartphone in the folded form. For specific implementations of the interface 1101 and the interface 1102, refer to the implementations of the interface 801 and the interface 802A described in FIG. 8A and FIG. 8B. Details are not described herein again.
Scenario 3-2). An interface 1103 shows a search interface of the foldable smartphone in the unfolded form. When the foldable smartphone detects a voice instruction, a recognition result interface of the voice instruction is similar to the interface 801. Details are not described herein again.

In a possible example, an interface 1104A shows a search result interface obtained when the foldable smartphone is in the unfolded form before the method provided in this embodiment of this application is used. With reference to the interface 1102 and the interface 1104A, it can be learned that search results displayed by the foldable smartphone in the folded form and in the unfolded form are the same.

In another possible example, an interface 1104B shows a search result interface of the foldable smartphone in the unfolded form. The interface includes two search results: a search result from a video APP 2 and a search result from a video APP 3. The video APP 2 is in a high definition (high definition, HD) version, and the video APP 2 has an in-application split-screen function. For example, the video APP 2 implements the in-application split-screen function based on APP Multiplier. With reference to the interface 1102 and the interface 1104B, it can be learned that search results displayed by the foldable smartphone in the folded form and in the unfolded form may be different after the method provided in this embodiment of this application is used. In this way, the foldable smartphone may obtain search results based on a device form and a version supported by the APP. Therefore, when detecting that the foldable smartphone is in the unfolded form, the foldable smartphone preferentially display a search result from an APP supporting the HD version or from an APP having the in-application split-screen function, thereby improving experience of viewing the search result by the user.

It should be noted that a specific form and specific content of the interface 1104B are not limited in this embodiment of this application. For example, the interface 1104B may further include more or fewer search results. This may be determined based on a version supported by the APP.

It should be further noted that, in this embodiment of this application, a source of the search result is not limited to an APP that has been installed on the foldable smartphone, and may alternatively be a quick application, an applet, a web page, or the like that is not installed on the foldable smartphone.

### Scenario 4:

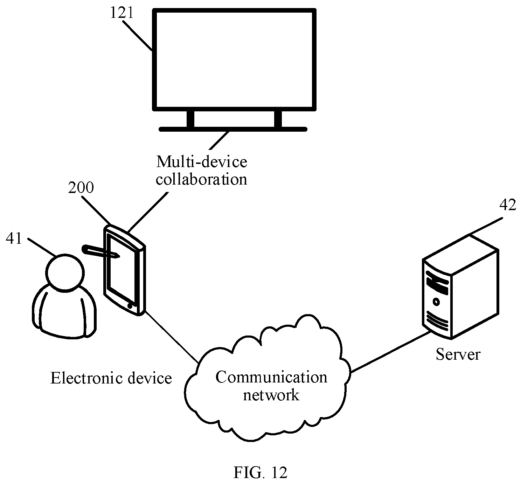

Based on the system architecture shown in FIG. 4, the electronic device 200 may further perform multi-device collaboration with another device, so that some tasks can be continued to the another device for processing. For ease of understanding, FIG. 12 is a diagram of another system architecture to which a search result recommendation method according to an embodiment of this application is applicable. In addition to the electronic device 200, the user 41, and the server 42, the system architecture shown in FIG. 12 may further include an electronic device 121. The electronic device 200 may be, for example, a mobile phone, and the electronic device 121 may be, for example, a large screen. The multi-device collaboration may be, for example, a scenario in which the mobile phone is projected to the large screen. The large screen may be used as a continuation device of the mobile phone, to receive media data continued from the mobile phone, and play and/or display the media data.

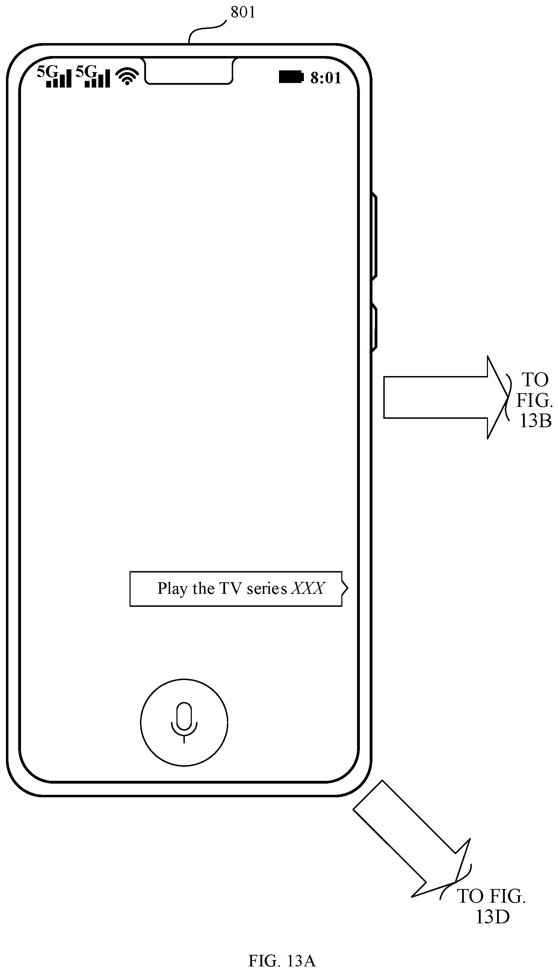

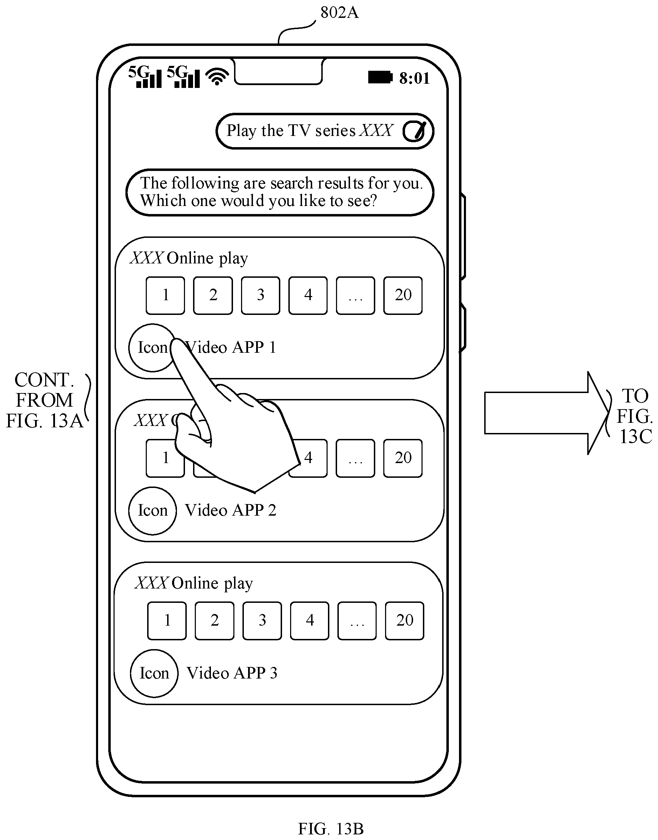

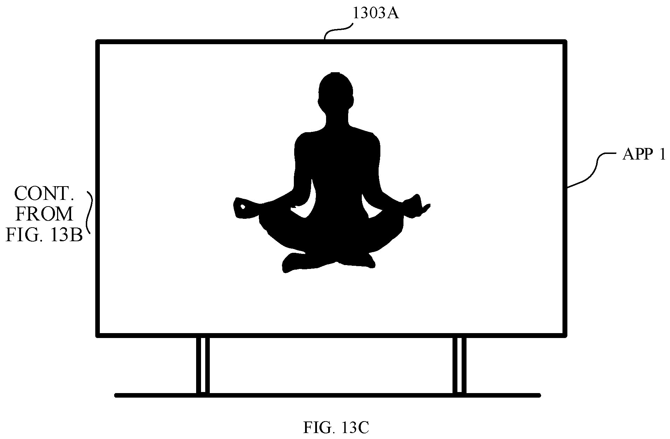

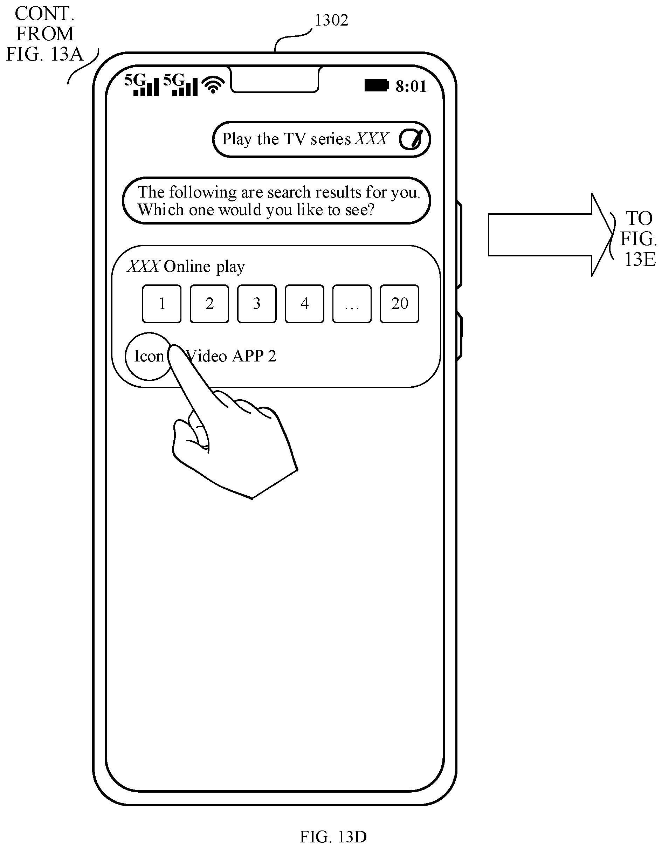

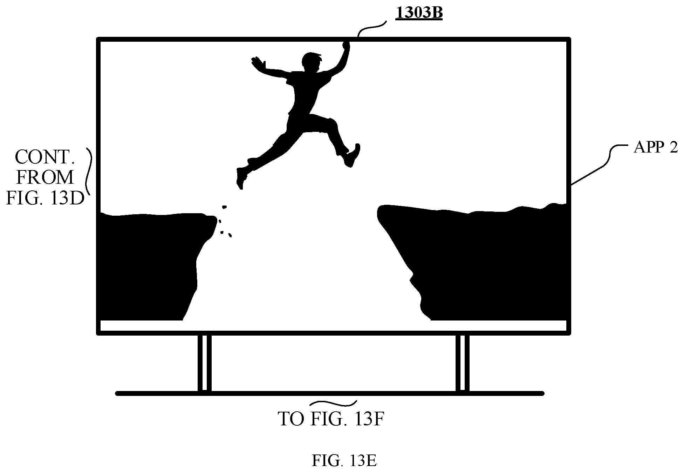

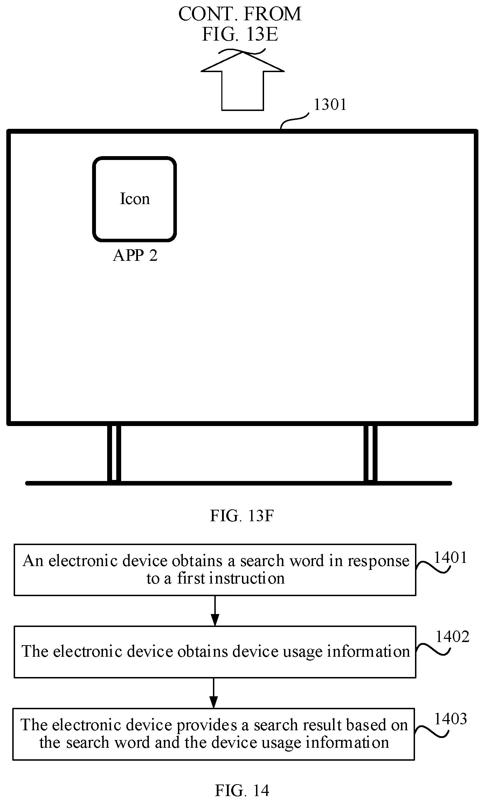

FIG. 13A to FIG. 13F are still another display interface of a search result recommendation method according to an embodiment of this application. It should be noted that, in this scenario, an example in which the electronic device 200 is a mobile phone and the electronic device 121 is a large screen is used. For an implementation process of a continuation scenario of another type of electronic device, refer to an implementation process of a continuation scenario of the mobile phone and the large screen. Details are not described again in this application.

In a possible example, before the method provided in this embodiment of this application is used, the mobile phone may display a search interface shown in an interface 801, and provide a search result interface shown in an interface 802. For implementations of the interface 801 and the interface 802A, refer to the implementations of FIG. 8A and FIG. 8B. Details are not described herein again. Optionally, based on the scenario in which the mobile phone is projected to the large screen, the mobile phone detects and responds to a user operation on a search result from a video APP 1, and may display an interface 1303A. Alternatively, optionally, based on the scenario in which the mobile phone is projected to the large screen, a search result interface shown in an interface 802A may be projected to the large screen for display.

In another possible example, after the method provided in this embodiment of this application is used, the mobile phone may still display the search interface shown in the interface 801. However, different from the search result interface shown in the interface 802, the mobile phone displays an interface 1302 based on a continuation status and APP information on the large screen. The interface 1302 may be understood as a search result interface obtained after the method provided in this embodiment of this application is used. As shown in the interface 1302, a search result, that is, a search result from a video APP 2, may be included. An interface 1301 is a home page interface of the large screen, the APP 2 is installed on the large screen, and the video APP 1 and a video APP 3 are not installed on the large screen.

Optionally, on the interface 1302, the mobile phone may continue, in response to a user operation on the search result from the video APP 2, a video from the video APP 2 to the large screen for playing. For example, an interface 1303B may be displayed on the large screen. Optionally, on the interface 1302, the mobile phone may alternatively directly continue, in response to successfully recognizing a voice instruction, a video from the video APP 2 to the large screen for playing. Alternatively, still optionally, the mobile phone may project the search result interface shown in the interface 1302 to the large screen for display.

It should be noted that, in this embodiment of this application, a search result is not limited to being determined based on an APP installation status on the large screen. For example, a search result may alternatively be determined based on a version supported by an APP installed on the large screen. For example, the video APP 1, the video APP 2, and the video APP 3 are installed on the large screen, where the video APP 2 installed on the large screen is in a version supporting the large screen, and the video APP 1 and the video APP 3 are in a common version.

It should be noted that, in this embodiment of this application, a source of the search result is not limited to an APP that has been installed on the mobile phone or on the large screen, and may alternatively be a quick application, an applet, a web page, or the like that is not installed on the mobile phone or on the large screen.

In addition, when the mobile phone determines a plurality of search results, a search result selection interface may be provided to the user through the mobile phone or the large screen. Then, after it is detected that the user selects one of the search results, a video corresponding to the selected search result is played on the large screen.

In this way, the mobile phone determines the search result that is continued to the large screen for display based on an APP installed on the large screen or an APP that is in a version supporting the large screen. Therefore, in the multi-device collaboration scenario, the mobile phone preferentially selects a search result from the APP installed on the large screen or a search result from the APP that is in the version supporting the large screen, so that a matching degree between the search result and a continuation device may be improved, thereby improving experience of viewing the search result by the user.

In addition, in the content described in the foregoing scenario 1 to scenario 4, after the electronic device adjusts, based on the device usage information, the search result determined based on the network information like the user CTR, if the electronic device does not obtain, through screening, a search result that meets the device usage information, the electronic device may keep displaying the search result determined based on the network information like the user CTR.

Based on the various interface display effects described above, the following describes an implementation process of a search result recommendation method provided in this application, to describe how to use the method provided in this application to achieve the interface processing effects described above, so as to improve search experience of a user.

In an optional embodiment, FIG. 14 is a flowchart of a search result recommendation method according to an embodiment of this application. The method may be performed by an electronic device. Refer to FIG. 14. The method includes the following steps.

S1401. The electronic device obtains a search word in response to a first instruction. The first instruction may include but is not limited to an operation of entering the search word in a search box included on any search interface by a user, and a voice instruction used for searching.

S1402. The electronic device obtains device usage information. The device usage information may include but is not limited to at least one of the following information:
1). Historical statistical information of an application usage status of the electronic device, which may include but is not limited to: historical statistical information of an APP usage status, quantity of opening times information of an APP, for example, a larger quantity of opening times of an APP indicates a higher rank of a search result from the APP in a display sequence; and last opening time information of the APP.
2). Real-time running information of the electronic device, which may include but is not limited to background residing information of the APP, network status information, remaining battery level information, running memory information, and storage space information.
3). Folding form information of the electronic device, which includes a folded form and an unfolded form.
4). Continuation status information of the electronic device, which includes a continued state and a non-continued state.

It should be noted that a sequence of performing step 1401 and step 1402 is not limited in this embodiment of this application. For example, the two steps may be simultaneously performed.

S1403. The electronic device provides a search result based on the search word and the device usage information. Optionally, the search result may be provided by displaying a search result interface. Optionally, the search result may be provided in a voice assistant playing manner. It should be noted that a manner of providing the search result is not limited in this embodiment of this application, and may be provided in any possible manner, or may be jointly provided in a plurality of manners. The provided search result may be a search result obtained through screening performed by the electronic device based on the device usage information, a plurality of search results obtained through sorting performed by the electronic device, or a plurality of search results obtained through screening and sorting performed by the electronic device.

For example, when the device usage information is the historical statistical information of the application usage status of the electronic device, the electronic device may display, based on the historical statistical information of the application usage status, a search result having a high matching degree with a usage preference of the user in a front position and/or in a larger display area; and correspondingly, the electronic device displays a search result having a low matching degree with the usage preference of the user in a rear position or does not display the search result, and/or displays the search result in a smaller display area. In this way, the user can conveniently view the search result in a habitual manner preferentially.

For another example, when the device usage information is the real-time running information of the electronic device, the electronic device displays, based on the real-time running information of the electronic device, a search result having a higher matching degree with a running status in a front position and/or in a larger display area; and correspondingly, the electronic device displays a search result having a lower matching degree with the running status in a rear position or does not display the search result, and/or displays the search result in a smaller display area. In this way, viewing efficiency and viewing experience of the search result can be improved.

For still another example, when the device usage information is a device folding form, based on the device folding form the electronic device displays, when the device folding form is the unfolded form, a search result having a better viewing effect in the unfolded form in a front position and/or in a larger display area; and correspondingly, the electronic device displays a search result having a poorer viewing effect in the unfolded form in a rear position or does not display the search result, and/or displays the search result in a smaller display area. In this way, a display effect when the device is in the unfolded form can be improved.

For still another example, when the device usage information is a continuation status of the device, based on the continuation status of the device, the electronic device displays, when the device has a continuation device, a search result having a better viewing effect on the continuation device in a front position and/or in a larger display area; and correspondingly, the electronic device displays a search result having a poorer viewing effect on the continuation device in a rear position or does not display the search result, and/or displays the search result in a smaller display area. In this way, a display effect in a device continuation scenario can be improved.

In addition, it should be noted that the device usage information may further include a plurality of types of device usage information, and the electronic device may further provide search results based on the plurality of types of device usage information.

Optionally, priorities of the plurality of types of device usage information may be set. For example, the folding form information of the electronic device and the continuation status information of the electronic device may be set to a first priority, the real-time running information of the electronic device may be set to a second priority, and the historical statistical information of the application usage status of the electronic device may be set to a third priority. In this way, the electronic device may screen or re-sort the search results level by level based on the priorities. For example, the device information obtained by the electronic device includes the historical statistical information of the application usage status of the electronic device and the real-time running information of the electronic device. In this case, based on the real-time running information and the historical statistical information of the application usage status, the electronic device may display a search result having a good real-time running effect (for example, residing in a background or better matching a network status) and a high matching degree with a usage preference of the user in a front position, and/or in a larger display area, and correspondingly, the electronic device displays a search result having a poor real-time running effect and a low matching degree with the usage preference of the user in a rear position or does not display the search result, and/or displays the search result in a smaller display area. In this way, the user can conveniently view the search result preferentially in a habitual manner with a good real-time running effect.

Optionally, weights of the plurality of types of device usage information may be set, and weight values corresponding to the search results are determined. In this way, the electronic device may provide the search results based on the weight values of the search results. For example, a search result having a higher weight value may be displayed in a front position, and/or in a larger display area; and correspondingly, a search result having a lower weight value may be displayed in a rear position or not displayed, and/or displayed in a smaller display area.

In an optional implementation, the electronic device may determine a first search result set based on the search word, and then adjust the first search result set based on the device usage information, to determine a second search result set. In this implementation, it may be understood that the search result interface displayed in S1403 is obtained by performing rendering based on the second search result set. The electronic device may determine, based on the search word, the first search result set from an information source like a network or a local. It may be understood that, when the electronic device does not obtain, through screening, a search result that meets the device usage information after adjusting the first search result set based on the device usage information, the electronic device may keep displaying the search result interface based on the first search result set.

In another optional implementation, the electronic device may alternatively directly determine, based on the search word and the device usage information, a search result set that meets the device usage information, to render the search result interface based on the search result set.

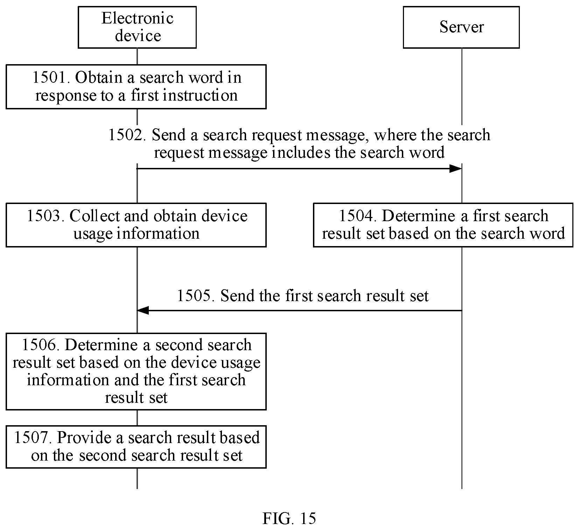

In another optional embodiment, FIG. 15 is another flowchart of a search result recommendation method according to an embodiment of this application. The method may be jointly performed by an electronic device a server. Refer to FIG. 15. The method includes the following steps.

S1501. The electronic device obtains a search word in response to a first instruction. For S1501, refer to the implementation of S1401, and details are not described herein again.

S1502. The electronic device sends a search request message to the server, where the search request message includes the search word. In addition, the search request message may further include information such as a timestamp.

S1503. The electronic device obtains device usage information. For S1503, refer to the implementation of S1403, and details are not described herein again.

It should be noted that a sequence of performing S1503 and S1501 or S1502 is not limited in this embodiment of this application.

S1504. The server determines a first search result set based on the search word.

In a possible embodiment, the server sends the search request message to a multi-channel database, for example, an inverted engine or a vector engine; then the server receives multi-channel recall results returned by the multi-channel database; and the server integrates the multi-channel recall results to determine the first search result set. For example, the server may perform hybrid sorting on the multiple-channel recall results with reference to information such as correlation, popularity, and timeliness of each video, so as to implement integration processing. Specifically, the server may aggregate video results in an APP dimension, perform a comprehensive evaluation and give a score on each APP based on video content of the APP, and re-sort the APPs in descending order of scores, so as to determine a sequence of the APPs included in the first search result set.

S1505. The server sends the first search result set to the electronic device.

S1506. The electronic device determines a second search result set based on the device usage information and the first search result set.

It may be understood that the electronic device may dynamically adjust the first search result set from the server based on the device usage information, so as to obtain the second search result set that better matches the electronic device, thereby improving search experience of the user.

In addition, it may be further understood that, when the electronic device does not obtain, through screening, a search result that meets the device usage information after adjusting the first search result set based on the device usage information, the electronic device may keep displaying the first search result set, that is, the second search result set in S1506 is the first search result set.

S1507. The electronic device provides a search result based on the second search result set.

Optionally, when the electronic device does not have a continuation device, the provided search result may be displayed on the electronic device; and when the electronic device has a continuation device, the provided search result may be displayed on the continuation device.

It should be noted that, for specific implementations of the search result recommendation methods shown in FIG. 14 and FIG. 15 in this application, refer to the foregoing embodiments of this application, and details are not described again.

Based on the foregoing embodiments, this application further provides an electronic device. The electronic device includes a plurality of functional modules. The plurality of functional modules interact with each other to implement functions performed by the electronic device in the methods described in embodiments of this application. The plurality of functional modules may be implemented based on software, hardware, or a combination of software and hardware, and the plurality of functional modules may be randomly combined or divided based on a specific implementation. For example, step 1401 to step 1403 that are performed by the electronic device in the embodiment shown in FIG. 14 are performed; or step 1501 to step 1503 and step 1505 to step 1507 that are performed by the electronic device in the embodiment shown in FIG. 15 are performed.

Based on the foregoing embodiments, this application further provides an electronic device. The electronic device includes at least one processor and at least one memory. The at least one memory stores computer program instructions. When the electronic device runs, the at least one processor performs functions performed by the electronic device in the methods described in embodiments of this application. For example, step 1401 to step 1403 that are performed by the electronic device in the embodiment shown in FIG. 14 are performed; or step 1501 to step 1503 and step 1505 to step 1507 that are performed by the electronic device in the embodiment shown in FIG. 15 are performed.

Based on the foregoing embodiments, this application further provides a search result recommendation system. The system may include the electronic device and the server in the foregoing embodiments. In a possible scenario, the system may further include a continuation device of the electronic device.

Based on the foregoing embodiments, this application further provides a computer program product. The computer program product includes a computer program (which may also be referred to as code or instructions). When the computer program is executed, a computer is caused to perform the methods described in embodiments of this application.

Based on the foregoing embodiments, this application further provides a computer-readable storage medium. The computer-readable storage medium stores a computer program. When the computer program is executed by a computer, the computer is caused to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, configured to support a computer apparatus in implementing the methods described in embodiments of this application. In a possible design, the chip system further includes a memory, and the memory is configured to store a program and data that are necessary for the computer apparatus. The chip system may include a chip, or may include a chip and another discrete component. A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided to a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the protection scope of this application. This application is intended to cover these modifications and variations of this application provided that the modifications and variations fall within the scope of the claims of this application and equivalent technologies thereof.

## Claims

1. A search result recommendation method, applied to a first electronic device, wherein the method comprises:
detecting a first instruction, wherein the first instruction comprises a search word;
obtaining device usage information, wherein the device usage information comprises at least one of the following information: historical statistical information of an application usage status of the first electronic device, real-time running information of the first electronic device, folding form information of the first electronic device, or continuation status information of the first electronic device; and
providing, in response to the first instruction, a screened search result or a plurality of sorted search results based on the search word and the device usage information.

2. The method according to claim 1, wherein the historical statistical information of the application usage status of the first electronic device comprises at least one of the following information: usage duration information of an application, APP, quantity of opening times information of the APP, and last opening time information of the APP.

3. The method according to claim 1 or 2, wherein the real-time running information of the first electronic device comprises at least one of the following information: background residing information of the APP, network status information, remaining battery level information, running memory information, and storage space information.

4. The method according to any one of claims 1 to 3, wherein the folding form information of the first electronic device comprises: a folded form and an unfolded form.

5. The method according to any one of claims 1 to 4, wherein the continuation status information of the first electronic device comprises: a continued state and a non-continued state.

6. The method according to claim 2, wherein
the screened search result is a first search result from a first APP; and
the plurality of sorted search results comprise: the first search result from the first APP and a second search result from a second APP, wherein when the plurality of sorted search results are provided on a display interface, the first search result is displayed above the second search result, and/or a display area of the first search result is greater than a display area of the second search result, wherein
in a specified historical time period, the first APP and the second APP meet at least one of the following:
usage duration of the first APP is greater than usage duration of the second APP;
a quantity of opening times of the first APP is greater than a quantity of opening times of the second APP; and
last opening time of the first APP is later than last opening time of the second APP.

7. The method according to claim 3, wherein
the screened search result is a first search result from a third APP; and
the plurality of sorted search results comprise: a third search result from the third APP and a fourth search result from a fourth APP, wherein when the plurality of sorted search results are provided on a display interface, the third search result is displayed above the fourth search result, and/or a display area of the third search result is greater than a display area of the fourth search result, wherein
the third APP and the fourth APP meet at least one of the following:
the third APP resides in a background, and the fourth APP does not reside in the background; or both the third APP and the fourth APP reside in a background;
when the network status information indicates a first network state, a requirement of the third APP on a network status is higher than a requirement of the fourth APP on a network status; or when the network status information indicates a second network state, a requirement of the third APP on a network status is lower than a requirement of the fourth APP on a network status, wherein the first network state is better than a network status threshold, and the second network state is worse than the network status threshold;
when the remaining battery level information indicates a first remaining battery level, a requirement of the third APP on a remaining battery level is higher than a requirement of the fourth APP on a remaining battery level; or when the remaining battery level information indicates a second remaining battery level, a requirement of the third APP on a remaining battery level is lower than a requirement of the fourth APP on a remaining battery level, wherein the first remaining battery level is higher than a remaining battery level threshold, and the second remaining battery level is lower than the remaining battery level threshold;
when the running memory information indicates first remaining running memory, a requirement of the third APP on remaining running memory is higher than a requirement of the fourth APP on remaining running memory; or when the running memory information indicates second remaining running memory, a requirement of the third APP on remaining running memory is lower than a requirement of the fourth APP on remaining running memory, wherein the first remaining running memory is greater than a remaining running memory threshold, and the second remaining running memory is less than the remaining running memory threshold; and
when the storage space information indicates first remaining storage space, a requirement of the third APP on remaining storage space is higher than a requirement of the fourth APP on remaining storage space; or when the storage space information indicates second remaining storage space, a requirement of the third APP on remaining storage space is lower than a requirement of the fourth APP on remaining storage space, wherein the first remaining storage space is greater than a remaining storage space threshold, and the second remaining storage space is less than the remaining storage space threshold.

8. The method according to claim 4, wherein the providing the screened search result or the plurality of sorted search results based on the search word and the device usage information comprises:
providing M search results from M APPs when the folding form information of the first electronic device is the folded form; and
providing N search results from N APPs when the folding form information of the first electronic device is the unfolded form, wherein the N search results belong to the M search results, N is less than M, and N is a positive integer; and
the N APPs meet at least one of the following: a version is a high-definition HD version, and the N APPs have an in-application split-screen function.

9. The method according to claim 5, wherein the providing the screened search result or the plurality of sorted search results based on the search word and the device usage information comprises:
providing P search results from P APPs when the continuation status information of the first electronic device is the non-continued state; and
providing Q search results from Q APPs when the continuation status information of the first electronic device is the continued state, wherein the Q search results belong to the P search results, Q is less than P, and Q is a positive integer; and
the Q APPs meet at least one of the following:
the Q APPs are installed on a second electronic device, wherein the second electronic device is a continuation device of the first electronic device; and
a version of the Q APPs of the second electronic device is a second version, and a version of an APP other than the Q APPs in the P APPs is a first version, wherein the second version is a version adapted based on a device type of the second electronic device, and the first version is a common version without distinguishing device types.

10. The method according to any one of claims 1 to 9, wherein the providing the screened search result or the plurality of sorted search results based on the search word and the device usage information comprises:
sending a search request message to a server in response to the first instruction, wherein the search request message comprises the search word;
receiving a first search result set from the server; and
adjusting the first search result set based on the device usage information, to obtain a second search result set, wherein the second search result set indicates the screened search result or the plurality of sorted search results.

11. The method according to claim 10, wherein the first search result set and the second search result set meet at least one of the following:
a display sequence of L search results comprised in the second search result set is different from a display sequence of the L search results comprised in the first search result set; and
a quantity of search results comprised in the second search result set is less than a quantity of search results comprised in the first search result set.

12. The method according to any one of claims 2 to 11, wherein the APP comprises at least one of the following:
an APP installed on the first electronic device;
a quick application that is not installed on the first electronic device; and
an applet that is not installed on the first electronic device.

13. A device, comprising at least one processor, wherein the at least one processor is coupled to at least one memory, and the at least one processor is configured to read a program stored in the at least one memory, to perform the method according to any one of claims 1 to 12.

14. A readable storage medium, wherein the readable storage medium stores instructions, and when the instructions are run on a device, the device is caused to perform the method according to any one of claims 1 to 12.
